# EUROPEAN PATENT SPECIFICATION

(11) **EP 1 369 439 B1**
(45) Date of publication and mention of the grant of the patent: **09.08.2006**
(21) Application number: 02710349.8
(22) Date of filing: 25.01.2002
(51) Int. Cl.: C08F 16/38, C08L 29/14, C08K 5/54, C08K 5/057, C09D 129/14, C09D 5/00, C09D 183/00, C09D 185/00, C09D 11/00, C09J 129/14, B41M 5/00, G03C 1/498, G02B 1/10, B01F 17/00

(54) **POLYVINYL ACETAL, POLYVINYL ACETAL COMPOSITION, INK, COATING MATERIAL, DISPERSANT, HEAT-DEVELOPABLE PHOTOSENSITIVE MATERIAL, CERAMIC GREEN SHEET, PRIMER FOR PLASTIC LENS, RECORDING AGENT FOR WATER-BASED INK, AND ADHESIVE FOR METAL FOIL**
POLYVINYLACETAL, POLYVINYLACETALZUSAMMENSETZUNG, TINTE ODER DRUCKFARBE, BESCHICHTUNGSMATERIAL, DISPERGIERMITTEL, WÄRMEENTWICKELBARES LICHTEMPFINDLICHES MATERIAL, KERAMIK-GRÜNFOLIE, PRIMER FÜR KUNSTSTOFFLINSE, AUFZEICHNUNGSMITTEL FÜR WASSERBASISTINTE ODER DRUCKFARBE UND KLEBSTOFF FÜR METALLFOLIE
POLYVINYLE ACETALE, COMPOSITION DE POLYVINYLE ACETALE, ENCRE, MATERIAU DE REVETEMENT, DISPERSANT, MATERIAU PHOTOSENSIBLE A DEVELOPPEMENT PAR LA CHALEUR, FEUILLE CERAMIQUE VERTE, AMORCE POUR LENTILLE PLASTIQUE, AGENT D'ENREGISTREMENT POUR ENCRE A BASE D'EAU, ET ADHESIF POUR FEUILLE METALLIQUE

(30) Priority: 25.01.2001 JP 2001017325
(43) Date of publication of application: 10.12.2003
(73) Proprietor: SEKISUI CHEMICAL CO., LTD., Osaka-shi, Osaka 530-8565 (JP)
(72) Inventor: YOSHIDA, Takahiro, Sekisui Chemical Co., Ltd., Mishima-gun, Osaka 618-8589 (JP)
(74) Representative: Hubert, Philippe
(86) International application number: PCT/JP2002/000541
(87) International publication number: WO 2002/059167

(56) References cited:
- EP-A- 0 116 300
- EP-A- 0 368 832
- EP-A- 0 474 885
- WO-A-92/13903
- JP-A- 5 097 917
- JP-A- 5 097 920
- JP-A- 5 246 151
- JP-A- 5 246 154
- JP-A- 7 017 769
- JP-A- 9 127 301
- JP-A- 10 278 412
- JP-A- 55 012 171
- US-A- 6 121 349
- DATABASE WPI Section Ch, Week 199209 Derwent Publications Ltd., London, GB; Class A14, AN 1992-068338 XP002317064 & JP 04 011601 A (KURARAY CO., LTD.) 16 January 1992 (1992-01-16)
- DATABASE WPI Section Ch, Week 199901 Derwent Publications Ltd., London, GB; Class A14, AN 1999-004202 XP002317065 & JP 10 278412 A (SEKISUI CHEM. IND. CO., LTD.) 20 October 1998 (1998-10-20)
- DATABASE WPI Section Ch, Week 199141 Derwent Publications Ltd., London, GB; Class A14, AN 1991-300293 XP002317066 & JP 03 200805 A (SEKISUI CHEM. IND. CO., LTD.) 2 September 1991 (1991-09-02)

## Description

### TECHNICAL FIELD

The present invention relates to polyvinyl acetal, a polyvinyl acetal composition, ink, coating material, a dispersant, a ceramic green sheet, a primer for a plastic lens, a recording material for water-based ink and an adhesive for metal foil, which are superior in film-forming capability, dispersibility of a dispersion matter and adhesion to the surface to be coated, and can realize higher solid contents.

### BACKGROUND ART

Conventionally, polyvinyl acetal has been used in various applications such as ink, coating material, dispersants, adhesives, ceramic green sheets, heat-developable photosensitive materials, primers for plastic lenses and binders of water-based ink receiving layers, since it has properties superior in film-forming capability, dispersibility of a dispersion matter like a pigment and adhesion to the surface to be coated.

Particularly in recent years, the frequency of uses of polyvinyl acetal has increased from the viewpoint of environmental protection. That is, as seen in the regulations of VOC in automobiles, three major tendencies of higher solid contents, an increase in water-based substance and adoption of powder matter are being placed as future common sense of the industries. Particularly, higher solid content does not require a capital investment compare with the other two matter and only reduces an amount of the solvent to increase the solid content, therefore it has a feature that the performances can be guessed from the conventional articles and assured and this technique is addressed by many researchers. The polyvinyl acetal having high dispersibility is noted as materials contributing to the higher solid contents.

As a method of realizing the higher solid contents using polyvinyl acetal, it is conceivable to increase the concentration of solid content, that is, to increase the content of a binder, but an increase of the concentration of solid content usually causes the solution viscosity to increase and this is a problem. Contrarily, to lower the viscosity of the solution, there are methods such as low polymerization degree and modification of a molecular structure.

For example, in Japanese Kohyo Publication 2000-503341, there is described polyvinyl acetal in which a main chain is modified. However, since this method modifies largely the main chain which mainly contributes as a factor controlling various properties of resin, this increases the possibility of changing properties and properties in a solution of resin. And, though in the system in which a pigment is contained as the third component in addition to resin such as ink or coating material, and solvent, higher solid content by reduction of viscosty can be attained, there was a possibility that it became impossible to satisfy another required performances such as stability of pigment dispersion required for compositions, coating strength and adhesion to a substrate.

Since polyvinyl acetal, of which a side chain is modified other than a main chain, has a detrimental effect on the behavior of viscosity and causes an increase of viscosity adversely, this may result in an obstacle to development of higher solid content. The reason for this is considered to be that the increased amount of a binder causes the binder concentration to increase and an interaction between polymers to increase. It is conceivable that the reason for this is that one ionic group is concerned in adsorption of a pigment, whereas another ionic groups are concerned in a reaction with another binder molecule to form a crosslinking structure, particularly, when an ionic group does not exist in any ends of a molecule and two or more ionic groups are contained in a molecule.

And, in Japanese Kokai Publication Hei-11-349889, there is disclosed printing ink and coating material containing polyvinyl butyral which uses polyvinyl alcohol partially hydrolyzed as a raw material. However, there is a description that in accordance with this technique, reduction of viscosity and higher solid content can be realized by controlling an amount of residual acetyl groups, but another performances, especially an effect of improving the stability of pigment dispersion is considered to become small. Further, since in this technique, a pigment base is prepared and then it is diluted with varnish when ink is produced, it is considered that a mechanical shear force has a much larger contribution to the dispersion of a pigment rather than a molecular structure of polyvinyl butyral. Therefore, it is difficult to think that the molecular structure of polyvinyl butyral has a significant effect on the properties of ink and coating material.

When polyvinyl acetal is used as the binder of the ink or the coating material, significantly many cases use polyvinyl acetal as the print ink of packaging materials, particularly packaging materials of foods, which are highly fancified. Because such ink for packaging of foods is required for being fancified and simultaneously has a high general purpose, main technique is not a method of using a special technique like a ultraviolet (UV) curing recently noted but still a conventional method in which coating and drying are conducted in a solvent system. And, since there is a possibility that a package printed using printing ink directly contacts with a mouth, with respect to the solvents and resins to be used, not only an amount but also kinds are regulated. Among them, the reason why polyvinyl acetal is used is that it has very high solubility in ethanol which itself has less effect on environment.

But, ink and coating material using conventional polyvinyl acetals as binders has insufficient dispersibility of a pigment and it was impossible to attain the ink having strong color strength. And since it is insufficient in stability of viscosity and dispersibility of a pigment with time, an increase or a decrease of the viscosity may occur when it is reserved for a long period and particularly in the case of highly concentrated ink, it is difficult to attain ink being conservative for a long period.

Polyvinyl acetal is also used as a binder of a heat-developable photosensitive material. Though a silver halide photosensitive material conventionally used widely is utilized in the field of image forming as materials of a wide use and high quality because of its excellent photographic properties, development and fixing are complex, and because a treatment process is wet type, treatment is complicated and has a problem of emitting a large amount of chemical waste solutions. Thus, a heat-developable photosensitive material, in which a developing process is performed by heat treatment, has been developed and put to practical use.

A heat-developable photosensitive material is formed by coating compositions obtained by dispersing primarily silver salt of a fatty acid, an organic reducing agent and, in some cases, a small amount of photosensitive silver halide in a binder on a supporting element. For example, in Japanese Kokai Publication Sho-43-4924, there is described a heat-developable photosensitive material which is applied to a supporting element such as paper, a plastic film, metal foil and the like by using a binder having a film formation property like polyvinyl butyral and polymethyl methacrylate.

Because such a heat-developable photosensitive material trails a conventional radiographic film using wet gelatin a little in terms of image characteristics, especially image density, definition of images/tone portion, improvements of these characteristics are desired. To do so, it was necessary to control stringently a nucleus growth of silver salt in heating the photosensitive material and in addition it was necessary to improve the dispersibility of silver salt dispersed in a binder.

Polyvinyl acetal is also used as a binder of a ceramic green sheet. The ceramic green sheet can be generally obtained by adding a binder and a plasticizer into a solvent in which ceramic powder is dispersed, mixing the mixture homogeneously with a mixing apparatus such as a ball mill, preparing slurry through deaeration, and then applying the slurry to a supporting element from which the adhesive is removable using a doctor blade, a three roll reverse coater, and the like, heating the applied slurry to be dried and then peeling the dried coating from the supporting element. For example, in Japanese Kokai Publication Hei-3-197511, Japanese Kokai Publication Hei-3-200805, Japanese Kokai Publication Hei-4-175261 and Japanese Kokai Publication Hei-4-178404, there is described a method of using polyvinyl acetal, especially polyvinyl butyral, for improving operability.

In recent years, a compact laminated ceramic condenser with a large capacity is required as electronic equipment is downsized, and a thin ceramic green sheet using ceramic powder having a particle diameter finer than a conventional one is required. However, when a particle diameter of the ceramic powder to be dispersed becomes small, there was apprehension that defect of dispersion of the ceramic powder occurs in the slurry for ceramic green sheet, and therefore it was necessary to improve dispersibility of ceramic powder having micro particle diameter.

Polyvinyl acetal is also used as a binder of a primer for a plastic lens. Since plastic lenses have the advantages in the points of light weight, impact resistance, easy processability, stainability, in recent years, they become widespread rapidly in the fields of optical materials and eyeglasses. But, since the plastic lenses have a disadvantage of being subject to flaws, these lenses are usually provided with hard coat layers made of silicon on the surface to enhance the surface hardness. A primer for a plastic lens was proposed as an approach for improving cohesion between a plastic lens substrate and a hard coat layer and also has a role to improve the impact resistance.

For the purpose of improvement of cohesion between a plastic lens substrate and a hard coat layer by a primer, there are proposed a method of using an epoxy compound described in Japanese Kokai Publication Sho-60-214301, a method of using a methacryl compound and an aromatic vinyl compound as main components described in Japanese Kokai Publication Sho-60-214302, a method of using a primer composition consisting of acrylpolyol and a multifunction organic isocyanate compound decribed in Japanese Kokai Publication Sho-61-114203. However, in any case, an improvement of cohesion was attained and property of chemical resistance was obtained, but there was a problem that an improvement of impact resistance was not attained.

On the other hand, a method of using polyurethane as a primer for improving the impact resistance of a plastic lens is disclosed in Japanese Kokai Publication Sho-63-87223. However, this technique has a problem that when a plastic lens having a primer layer consisting of this polyurethane was immersed in a hard coat solution to provide a hard coat layer, polyurethane of the primer layer is dissolved in a solvent of the hard coat solution and contaminates the hard coat solution or the primer layer becomes whitish and clearness is lost.

To resolve these problems, in Japanese Kokai Publication Hei-09-127301, there is disclosed a description concerning a plastic lens in which adhesion of a coating is good and which is superior in impact resistance, resistance to abrasion, chemical resistance, weather resistance and antireflective property. However, to attain required performances, especially cohesion, it is insufficient only by hydroxyl group contained in polyvinyl acetal and particularly when inorganic micro particles are contained, there was apprehension of defect of dispersion of the micro particles in polyvinyl acetal.

Polyvinyl acetal is also used as a binder of a recording material for water-based ink. In recent years, an ink-jet recording type using water-based ink becomes widespread as a measure to output characters and images. A recording material used in this ink-jet recording type is required for being superior in absorbency of ink, being capable of controlling the spread of ink dots on a recording material, being clear, being ready to dry for a printed face, being possible in clear print regardless of kinds of ink. To satisfy these performance required for the recording material for water-based ink, it is important to balance between the absorbency and water resistance of the ink receiving layer of the recording material.

In Japanese Kokai Publication Sho-55-146786, there is disclosed a recording material for water-based ink, in which an ink receiving layer consisting of a water-soluble resin such as polyvinyl alcohol and polyvinylpyrrolidone is formed on a supporting element such as a plastic film, paper, a glass plate and the like. However, in this recording material for water-based ink, absorbency and fixing property of water-based dye ink were excellent, but fixing property of water-based pigment ink was not sufficient, and water resistance of the ink receiving layer was insufficient.

In Japanese Kokai Publication Sho-57-102391, there is disclosed a recording material for water-based ink which is balanced between absorbency and water resistance by mixing hydrophilic polymer and oleophilic polymer. However, in the recording material for water-based ink, clearness of an ink receiving layer is insufficient and this can not be used for applications like an OHP sheet and fixing property of water-based pigment ink was not sufficient.

Polyvinyl acetal is also used for adhesive for metal foil. A printed circuit board is usually constructed by bonding metal foil such as copper foil to a substrate such as phenol impregnated paper using an adhesive. As the adhesive for metal foil, polyvinyl acetal represented by polyvinyl butyral, and an adhesive composition based on a thermosetting resin represented by phenol resin, epoxy resin or melamine resin is widely used.

In manufacturing such a printed circuit board, first, metal foil such as copper foil is bonded to the substrate using the adhesive for metal foil to obtain a laminated plate, and then by etching the above-mentioned metal foil, a desired printed circuit is obtained. In recent years, as various electronic and electric equipment is reduced in weight and downsized, in the printed circuit board, downsizing and integration of a printed circuit are accelerated. With the above-mentioned high integration, solder bath immersion time in mounting many electronic devices on the printed circuit board is extended. Consequently, the adhesive for metal foil for constructing the above-mentioned printed circuit board is intensively desired to improve heat resistance and peeling strength of metal foil or an adhesive layer in a solder bath of 260°C.

To meet these performances, there have been proposed various polyvinyl acetals and adhesive compositions thereof. For example, in Japanese Kokai Publication Sho-55-27342, there is proposed polyvinyl acetal obtained by reacting polyvinyl alcohol having a polymerization degree of 2500 to 3000 with aldehyde. And, in Japanese Kokai Publication Sho-58-98306, there is described an adhesive containing polyvinyl acetal having a polymerization degree of 1500 to 2500, in which a weight ratio of a portion of acetacetal to a portion of butyl acetal is 3:7 to 7:3 and a portion of acrylic acid is 0.1 to 1.9 weight %, for the purpose of improving solder heat resistance and adhesion of an adhesive containing polyvinyl acetal, and it is disclosed that the adhesion strength can be further enhanced by introducing a portion of acrylic acid into polyvinyl acetal. And, in Japanese Kokai Publication Sho-58-98307, there is described an adhesive containing polyvinyl acetal having a polymerization degree of 1500 to 2500, in which a weight ratio of a portion of acetacetal to a portion of butyl acetal is 3:7 to 7:3 and a portion of maleic acid is 0.1 to 1.9 weight %, and it is disclosed that the adhesion strength can be further enhanced by introducing a portion of maleic acid into polyvinyl acetal. In addition to this, a technique described in Japanese Kokai Publication Hei-4-309509 is proposed.

However, these adhesives containing polyvinyl acetal had high adhesion strength but had a problem that it was difficult to apply the adhesive uniformly because of high viscosity. And so, in Japanese Kokai Publication Hei-4-309509, as the adhesive having superior solder heat resistance and peeling strength for metal foil in low viscosity, there is disclosed an adhesive for bonding copper foil of a printed circuit, which is based on polyvinyl acetal having a polymerization degree of 1500 to 2500, in which a weight ratio of a portion of acetacetal to a portion of butyl acetal is 3:7 to 7:3 and a portion of carboxyl group coupled as a side chain is 0.1 to 5 weight %. Though it is apparent that the polyvinyl acetal containing carboxyl group like this contributes to an improvement of adhesion strength, it is very difficult to control its adhesion strength. Particularly, carboxy-containing structure largely results from polyvinyl alcohol which is raw material of polyvinyl acetal and generally is obtained by copolymerization of vinyl acetate which is one of raw material of polyvinyl alcohol and vinyl compound containing carboxyl group and therefore it is very difficult to control an amount of carboxyl group contained in a molecule. Therefore, an amount of carboxyl group contained in a molecule could not be controlled and had a certain distribution and there were frequently variations in adhesion strength.

In Japanese Kokai Publications Hei-10-168128, there is described polyvinyl alcoholic polymer. This polyvinyl alcoholic polymer is formed by modifying one end of polyvinyl alcohol. This polyvinyl alcoholic polymer is used as a dispersant or dispersing agent to obtain vinyl polymer particles, which have a sharp particle size distribution, a high bulk density and high absorbency of a plasticizer, and low in residual vinyl monomer, in suspension polymerizing vinyl compound. Accordingly, this invention does not intend to control the adhesion strength but aims to improve a process to conduct polymerization stably. And since the acetalized one using polyvinyl alcohol, described in the invention, contains much residual acetyl group, it is insufficient as an adhesive for metal foil considering various performances including coating property. Accordingly, polyvinyl alcohol polymer of this invention has a possibility of controlling the adhesion strength, but its performance is far from the performance as an adhesive for metal foil.

Further, in actual manufacturing of the printed circuit board, generally, by applying an adhesive for metal foil to a copper foil to prepare copper foil with an adhesive layer, and on the other hand, a prepreg is separately manufactured, and then the copper foil with an adhesive layer is laminated on the prepreg and the adhesive layer is attached to the prepreg by heating and applying pressure to obtain a printed circuit board.

Here, as the adhesive for metal foil to be used for obtaining copper foil with an adhesive layer, there is used polyvinyl acetal having a polymerization degree of 1700 to 2500, which is adjusted so as to have its viscosity of 8 to 15 Pa·s in order to secure desired solder heat resistance and peeling strength for metal. However, though as described above, there has been a growing requirement for reduction of the amount of the solvent to be used, that is, the higher solid content from the view point of the recent environmental issues and the response to cost reduction, the conventional polyvinyl acetals have still had the high viscosity of adhesive. And, though efforts to reduce the polymerization degree and increase an amount of fatty acid ester have been done in order to lower viscosity, there was no polyvinyl acetal which can assure the solder heat resistance and the peeling strength equivalent to or higher than conventional adhesives.

### SUMMARY OF THE INVENTION

It is an object of the present invention to provide polyvinyl acetal, a polyvinyl acetal composition, ink, coating material, a dispersant, a ceramic green sheet, a primer for a plastic lens, a recording material for water-based ink and an adhesive for metal foil, which are superior in film-forming capability, dispersibility of a dispersion matter and adhesion to the surface to be coated, and can realize higher solid contents.

The first invention is polyvinyl acetal containing one to three functional groups at ends of a molecule.

The functional groups of the first invention are located at an end of a molecule. The above-mentioned functional groups are more preferably ionic groups. The above-mentioned ionic group is further more preferably an acidic group, and particularly preferably carboxyl group or sulfonic acid group. And, the above ionic group is further more preferably a basic group, and particularly preferably contains a nitrogen atom.

Preferably, the polyvinyl acetals of the invention have a polymerization degree of 50 to 3500. When acetal group is considered as two hydroxyl groups acetalized, a degree of acetalization is preferably 60 mole% or more, and an amount of residual acetyl groups is preferably 3 to 10 mole%.

A polyvinyl acetal composition containing polyvinyl acetals of the invention is also a part of the present invention. The content of polyvinyl acetal in the above-mentioned polyvinyl acetal composition is preferably 5 weight % or more.

The invention also provides an ink in which the polyvinyl acetals of the invention are used as binders.

The invention also provides a coating material in which the polyvinyl acetals of the invention are used as binders.

The invention also provides a dispersant consisting of the polyvinyl acetals of the invention.

The invention also provides a heat-developable photosensitive material in which the polyvinyl acetals of the invention are used as binders.

The invention also provides a slurry for a ceramic green sheet, which contains the polyvinyl acetals of the invention, ceramic powder, a plasticizer and a solvent. A ceramic green sheet consisting of the slurry for a ceramic green sheet of the invention is also a part of the present invention.

The invention also provides a primer composition for a plastic lens containing the polyvinyl acetals of the invention, a hydrolyzable organosilane compound or hydrolysate thereof, an organometallic alkoxide compound, inorganic micro particles, and a curing catalyst. And, a plastic lens with a hard coat layer formed on the both surfaces of a plastic lens substrate, wherein a primer layer using the primer composition for a plastic lens of the invention is formed between the above plastic lens substrate and the above hard coat layer, is also a part of the present invention.

The invention also provides a recording material for water-based ink provided with an ink receiving layer on its supporting element, in which the aforementioned ink receiving layer comporises the polyvinyl acetals of the invention, a water-soluble epoxy compound and a composition containing at least one kind of micro particles selected from the group consisting of silicic acid, silica, kaolin, clay, alumina, calcium carbonate, zeolite, titanium oxide, talc and a spherical polymer. Preferably, the above-mentioned ink receiving layer comporises a composition containing 15 to 40 parts by weight of a water-soluble epoxy compound based on 100 parts by weight of polyvinyl acetal.

The invention also provides an adhesive for metal foil, which contains the polyvinyl acetals of from the first to the third inventions, a thermosetting resin, and a solvent.

### DETAILED DISCLOSURE OF THE INVENTION

Hereinafter, the present invention will be described in detail.

The invention provides a polyvinyl acetal containing one to three functional groups at ends of a molecule.

The above-mentioned functional group is not particularly limited as long as it improves the dispersibility of a dispersion matter like a pigment, and functional groups as such carboxyl group, silyl group, a halogen group, amino group, mercapto group, sulfonyl group, thionyl group, epoxy group, oxazoline group, and maleimide group are given. Particularly, the ionic group is preferable because of high dispersibility of a pigment and the like, and an acidic group such as sulfonyl group or carboxyl group and a basic group having a nitrogen atom such as amino group are more preferable. By the way, the above functional group may be hydroxyl group.

By having the above functional groups, the polyvinyl acetal of the invention has more active points and higher dispersibility of a pigment. Further, even if the polyvinyl acetal is blended with resin not having a functional group, there is an effect of improving the dispersibility when it is used as a binder. For example, when a small amount of the polyvinyl acetal of the present invention is blended in a general-purpose resin, a large merit of improving the dispersibility can be obtained.

When the polyvinyl acetal has the above functional group at one end, there is a merit that the probability that one side of a polymer adsorbs a pigment and the other side of a polymer is intertwined with another polymer increases, and an adsorbing medium becomes large and therefore the stability of dispersion is accelerated. When the polyvinyl acetal has the above functional group at both ends of a molecule, the adsorption is more accelerated and the dispersibility becomes higher because the number of adsorption points becomes more than that of one end.

The number of functional groups described above is one to three at ends of a molecule. In this case, one to three functional groups may exist at each end of a molecule. When the polyvinyl acetal has the above functional group at one end, there is a merit that the probability that one side of a polymer adsorbs a pigment and the other side of a polymer is intertwined with another polymer increases, and an adsorbing medium becomes large and therefore the stability of dispersion is accelerated. When the polyvinyl acetal has the above functional group at both ends of a molecule, the adsorption is more accelerated and the dispersibility becomes higher because the number of adsorption points becomes more than that of one end.

When the above functional group is located at an end of a molecule, it is considered relatively easy to industrial control the number of functional groups since the number of functional groups is at most two in a chain polymer and relatively less in a branched polymer or a star-shaped polymer in comparison with being located in the main chain.

The polymerization degree of the polyvinyl acetals of from the first to the third inventions is preferably 50 to 3500. When the polymerization degree is less than 50, a synthesis of polyvinyl acetal which is raw material, becomes difficult, and when it is more than 3500, acetalization may be difficult because the viscosity of an aqueous solution of polyvinyl acetal is too high.

Here, when the polyvinyl acetals of the invention are used as the binder of the ink or the coating material, the polymerization degree thereof is more preferably 150 to 1000 in consideration of film strength after drying and usability. When the polyvinyl acetals of the invention are used as the binder of the heat-developable photosensitive material, the polymerization degree thereof is more preferably 200 to 3000, and furthermore preferably 300 to 1000 in consideration of the balance in the dispersibility of silver salt, the film strength and coating characteristics. When the polyvinyl acetals of the invention are used as the binder of slurry for the ceramic green sheet, the polymerization degree thereof is more preferably 200 to 3500, in consideration of the film strength, other properties and usability, and furthermore preferably 300 to 2400. When the polyvinyl acetals of the invention are used for the primer composition for a plastic lens, the polymerization degree thereof is more preferably 100 to 3000.

The degree of acetalization of the polyvinyl acetals is not limited, it is preferably 60 mole% or more in consideration of an interaction with a solvent, a pigment or a binder, for example, when the polyvinyl acetal is dissolved in an organic solvent for use in ink, coating material, a heat-developable photosensitive material or slurry for the ceramic green sheet. When the degree of acetalization is less than 60 mole%, there is a tendency that hydrophilicity increases and water resistace decreases and because particles become resistant to precipitation, the production of resin becomes difficult. The degree of acetalization is more preferably 60 to 75 mole%.

Preferably, the content of residual acetyl groups of the polyvinyl acetals of from the first to the third inventions is 0.5 to 25 mole%. When the content is less than 0.5 mole%, the production of polyvinyl acetal may become difficult, and when it is more than 25 mole%, a synthesis of polyvinyl alcohol, raw material, becomes difficult and therefore a synthesis of polyvinyl acetal may become difficult. More preferably, the content is 3 to 20 mole%. And, when the polyvinyl acetals of the invention are used as the binder of the slurry for the ceramic green sheet, the content of residual acetyl groups is furthermore preferably 1 to 17 mole% since a glass transition temperature is lowered and the operability of the ceramic green sheet may deteriorate because of too high flexibility. Further, when the polyvinyl acetals are used as the binder of the ink, the content of residual acetyl groups is furthermore preferably 3 to 5 mole% in such a way that the ink exhibits a stable rheology characteristic without impairing coating characteristics.

Incidentally, when the above-mentioned degree of acetalization or the content of the residual acetyl group is determined, the acetal group is considered as two hydroxyl groups acetalized.

The content of a polyvinyl alcohol unit in the polyvinyl acetals of from the first to the third inventions is preferably 10 to 45 mole%. When it is less than 10 mole%, a synthesis of polyvinyl acetal may become difficult, and when it is more than 45 mole%, a rate of a hydrophilic group increases and particles may become resistant to precipitation in producing resin and also there is a possibility that stability in storage is deteriorated in using the polyvinyl acetal as a binder for ink. The content of a polyvinyl alcohol unit is more preferably 17 to 35 mole%.

A method of producing the polyvinyl acetals of the invention is not specifically limited, and there are given, for example, a method of adding various aldehydes to an aqueous solution of polyvinyl alcohol and acetalizing the mixture using a publicly known method. A typical method will be described below.

That is, first, a heated aqueous solution of polyvinyl acetal is preferably cooled to a temperature of 40°C or lower and then an acid catalyst is added to the solution and the solution is more preferably cooled to a temperature of -10 to +30°C. Next, acetalization reaction is initiated by adding aldehyde and after the solution is stirred preferably at a temperature of 20 to 60°C for one to six hours, acetalizing is stopped to obtain the polyvinyl acetals of from the first to the third inventions by neutralizing the solution.

The above-mentioned acid catalyst is not specifically limited, and as the acid catalyst, there are given organic acids such as acetic acid, p-toluene sulfonic acid and the like and inorganic acids such as nitric acid, hydrochloric acid, sulfuric acid and the like.

Preferably, a pH of a reaction solution of the above-mentioned acetalizing becomes 1 or less by adding 35 weight% hydrochloric acid.

The above-mentioned aldehyde is not limited, and as the aldehyde, there are given formaldehyde (p-formaldehyde), acetaldehyde (p-acetaldehyde), propionaldehyde, butylaldehyde, amilaldehyde, hexyl aldehyde, heptyl aldehyde, 2-ethylhexyl aldehyde, cyclohexyl aldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde and β-phenylpropionaldehyde. Among them, acetaldehyde or butylaldehyde are preferable and butylaldehyde is further preferable. These aldehyde may be used alone or in combination of two or more kinds.

A method of stopping the above-mentioned acetalizing is not limited, and there are given a method of using a neutralizer and a method of washing with hot water or distilled water. The above-mentioned neutralizer is not limited, and as the neutralizer, there are given ammonia, sodium acetate, potassium carbonate, sodium carbonate, sodium hydroxide, potassium hydroxide, calcium hydroxide, barium hydroxide and calcium carbonate; alkylene oxides such as ethylene oxide; and glycidyl ethers such as ethylene glycol diglycidyl ether.

A method of introducing the functional groups is of post-modifying using a compound having a functional group. For example, there is given a method of synthesizing polyvinyl alcohol (PVA) by saponification after radical polymerizing vinyl acetate in the presence of a compound having the above functional group and at least one mercapto group in a molecule. Further specifically, for example, to introduce hydroxyl group into the ends, a compound like mecaptoethanol or mecaptopropanol may be used, and to introduce carboxyl group into the ends, a compound like mecaptopropionic acid may be used. In addition, to introduce mercapto group into the ends, two or more mercaptanes may be used. By reacting a compound having silyl group and isocyanate group in a molecule with hydroxyl group at ends, it is possible to introduce silyl group into ends.

The polyvinyl acetals of the invention can be served for various applications by forming a composition to which another resin, solvent, additive or the like is added. A composition containing such polyvinyl acetals is also a part of the present invention. The polyvinyl acetal content in the composition of this case is preferably 5 weight % or more. When the content is 5 weight % or more, it is possible to display properties superior in the film-forming capability, the dispersibility of a dispersion matter like a pigment and the adhesion to the surface to be coated.

The polyvinyl acetals of the invention can be used for a variety of applications such as ink, coating material, coating for plastics, an intermediate film for laminated glass, resining of fibers, various coating materials, baking enamel, wash primer, adhesive lacquer, a printed circuit board, a ceramic condenser, a dispersant, a ceramic green sheet, a heat-developable photosensitive materials, a primer for a plastic lens and binders of an ink receiving layer.

The case where the polyvinyl acetals of the invention are used as the binder of the solvent system is preferred since a decrease in the viscosity of the solution in dissolving polyvinyl acetal in the solvent enables the higher solid content and the reduction of the amount of the solvent to be used. And, conventionally, it is common that an amount of solid content such as a binder other than a pigment is increased and a dispersing step is conducted in a condition in which shear force strongly acts to improve the dispersibility, but by using the polyvinyl acetals of the invention, adequate dispersibility and stability of dispersibility can be attained without higher solid content and simultaneously a significant viscosity increase is hardly developed even in increasing an amount of the solid content according to a conventional method. Further, even if inorganic powder body represented by a pigment is more excessively charged than usual, adequate dispersibility is exhibited in higher solid content because the polyvinyl acetals of the invention are a resin which has adsorptive force to an inorganic substance, which only controls cohesion between inorganic substances. In addition, since it is possible to obtain much dilution from condensate, the reduction of transporting cost can be attained together.

The ink of the invention uses, the polyvinyl acetals of from the first to the third inventions are used as binders.

The polyvinyl acetals of the invention have high dispersibility of a pigment. Therefore, when the polyvinyl acetals of the invention are used as binders, it is possible to attain ink having intensive color strength which was considered to be a weak point in conventional polyvinyl acetal ink. Furtheromore, since the polyvinyl acetals of the invention are remarkably superior in stability of viscosity with time and dispersibility of a pigment, it is possible to prevent increase with time and decrease of viscosity which was considered to be a weak point in conventional polyvinyl acetal ink and to attain gloss ink which is conservative for a long period even in highly concentrated ink. And, by blending this polyvinyl acetal in a binder contributing to reduce viscosity, it is possible to attain a binder having low viscosity and high dispersibility of a pigment. Further, by blending this polyvinyl acetal with a binder exhibiting other properties, it is possible to impart additional functions to the binder. As the above pigment, inorganic or organic pigment is given. As the above inorganic pigment, for example, titanium oxide, carbon black, and the like are given. As the above organic pigment, for example, diazo pigment, phthalocyanine pigment, and the like are given.

Particularly, the polyvinyl acetals of the invention exert excellent performances in dispersibility of a pigment and stability of pigment dispersion, especially in stability of dispersion, in a soluble azo pigment represented by Carmine 6B or a phthalocyanine pigment like copper phthalocyanine blue. And, for the behavior of viscosity, it is possible not only to attain viscosity equivalent to a low viscosity article using resin having a modified structure shown in the prior arts but also to extremely suppress an increase of viscosity with time while an increase of viscosity with time tends to be high in the resin having a structure shown in the prior arts.

An amount of the polyvinyl acetal to be blended in the ink of the invention is preferably 5 to 25 weight %, and more preferably 10 to 20 weight %. And, an amount of the pigment to be blended in the ink of the second invention is preferably 20 to 30 weight % for thickened ink and preferably 10 to 15 weight % for diluted ink.

Besides the pigment and the polyvinyl acetal, a solvent may be added to the above-mentioned ink, and another adhesive promoter, a retardant, a plasticizer, a filler, a wax, a compatibilizing agent, a surfactant, a dispersant, a tackifier, and the like may be added as required.

A coating material, wherein the polyvinyl acetals of the invention are used as binders makes it possible to attain the performance similar to the case of the ink.

A dispersant comprising the polyvinyl acetals of the inventions obtained, for example, by adding the polyvinyl acetals of the invention to another resin in a small amount, can be used as the binder having improved dispersibility.

A heat-developable photosensitive material, wherein the polyvinyl acetals of the invention are used as binders silver salt of the heat-developable photosensitive material improves in the dispersibility and the image properties thereof become superior.

As a method of producing the heat-developable photosensitive material of the invention, there is given a method in which for example, the polyvinyl acetals of the invention, organic silver salt, a reducing agent and a solvent are dispersed by a ball mill and then silver halide, silver halide forming components and various additives are additionally added to the solution as required and the mixture is dispersed by a ball mill to prepare a dispersion and this dispersion is applied to a supporting element in such a way that an amount of organic silver salt becomes a specified amount and a solvent is evaporated.

The above-mentioned organic siver salt is not specifically limited as long as it is colorless or white silver salt, which is relatively stable for light, and reacts with a reducing agent and produces silver when it is heated to a temperature of 80°C or higher in the presence of the silver halide exposed to light, and silver salt of an organic compound having mercapto group, thion group or carboxyl group, and benzotriazole silver and the like are give. Specifically, for example, silver salt of dithio carboxylic acid such as silver salt of 3-mercapto-4-phenyl 1,2,4-triazole, silver salt of 2-mercapto-benzimidazole, silver salt of 2-mercapto-5-aminothiazole, silver salt of 1-phenyl-5-mercapto thiazole, silver salt of 2-mercapto benzotriazole, silver salt of thioglycolic acid, silver salt of dithioacetic acid; aliphatic silver carboxylate such as thioamide silver, thiopyridine silver salt, silver salt of dithiohydroxybenzole, silver salt of mercaptotriazine, silver salt of mercaptooxathiazole, silver caprate, silver laurate, silver myristate, silver palmitate, silver stearate, silver behenate, silver maleate, silver hydroxystearate, silver adipate, silver sebacate, silver succinate, silver acetate and silver butyrate; silver thion carboxylate, aliphatic silver carboxylate having thioether group, silver salt of tetrazaindene, S-2-aminophenyl-thiosulfate, amino alcohol including metal and organic acid metalchelate. Among them, silver salt of aliphatic carboxylate is preferable and silver behenate is more preferable.

A particle diameter of the above-mentioned organic acid silver salt is preferably 0.01 to 10 µm and more preferably 0.1 to 5 µm.

The polyvinyl acetal of the invention is preferably used in a weight ratio of a portion of the polyvinyl acetal to the organic silver of 1:10 to 10:1, and more preferably used in a weight ratio of 1:5 to 5:1.

The above-mentioned reducing agent is not particularly limited and appropriately selected depending on the siver salt used, and substituted phenols, bisphenols, naphthols, bisnaphthols, polyhydroxybenzens, di- or poly-hydroxynaphthalenes, hydrochinone monoethers, reducing saccharides, aromatic amino compounds, hydroxylamines, and hydrazines are given.

As the above-mentioned solvent, there are favorably used substances which dissolve polyvinyl acetal and hardly contain water. Specifically, ketones and esters are preferable, and diethyl ketone, methylethyl ketones and ethyl acetate are more preferable. In addition, when ethanol, n-propyl alcohol and isopropyl alcohol are used, it is preferred to use alcohols dehydrated.

As the above-mentioned supporting element, resin films such as polyethylene terephthalate, polycarbonate, polyethylene and polyvinylacetal cellulose ester, glass, paper, a metal plate such as an aluminum plate are given.

An amount of organic silver to be applies to the above supporting element is preferably 0.1 to 5 g as an amount of silver per 1 m² of the supporting element. When this amount is less than 0.1 g, image density may become low, and when it is more than 5 g, enhancement of image density is not recognized and becomes disadvantageous in the cost. It is more preferably 0.3 to 3 g.

Further, when a black image is formed with silver, a color tone agent may be used. And, when a colored image is formed, a color coupler and leuco dye may be added. Further, a sensitizer may be added as required.

According to the invention there is also provided a slurry for the ceramic green sheet, which contains the polyvinyl acetals of the invention, ceramic powder, a plasticizer and a solvent.

Preferably, an amount of the polyvinyl acetals of the invention to be blended in the slurry for a ceramic green sheet of the invention is 3 to 15 weight %. When the amount of the polyvinyl acetal to be blended is less than 3 weight %, flexibility of the ceramic green sheet to be obtained is insufficient because of an insufficient amount of the polyvinyl acetal dispersed throughout the ceramic powder and cracks becomes prone to occur after baking. When it is more than 15 weight %, shrinkage of the sheet may become large in baking the obtained ceramic green sheet.

As the above-mentioned ceramic powder, a conventionally publicly known substance can be adopted, and for example, there are given powder such as alumina, zirconia, aluminum silicate, titanium oxide, zinc oxide, barium titanate, magnesia, sialon, crystallized glass, silicon carbide, silicon nitride, aluminum nitride, and the like. These ceramic powder may be used alone or in combination of two or more kinds. And glass frit such as MgO-SiO₂-CaO, B₂O₃-SiO₂, PbO-B₂O₃-SiO₂, CaO- SiO₂- MgO- B₂O₃ or PbO-SiO₂-B₂O₃-CaO may be added to these ceramic powder.

Though a particle size of the above-mentioned ceramic powder is not particularly limited, it is preferably 0.5 µm or smaller when the powder is used for producing a thin green sheet having a thickness of 5 µm or less.

The above-mentioned ceramic powder is preferably blended in the slurry for a ceramic green sheet in an amount ranging from 30 to 80 weight %. When blending amount is less than 30 weight %, operability in forming the sheet may deteriorate since the viscosity becomes too low. When it is more than 80 weight %, kneading property may be deteriorated since the viscosity becomes too high.

The above-mentioned plasticizer is not particularly limited as long as it is high in compatibility with the polyvinyl acetals of from the first to the third invention, and as the plasticizer, there are given phthalates such as dibutyl phthalate, dioctyl phthalate, diisodesyl phthalate, butyl benzyl phthalate, phosphates such as tricresylphosphate, tributylphthalate, triethlphthalate, resin acid ester such as methylacetyl ricinoleate, dibutyl sebacate and dioctyl adipate, glycol derivatives such as butylphthalyl glycolate and triethylene glycol-2-ethyl butylate. These plasticizer may be used alone or in combination of two or more kinds.

The above plasticizer is preferably blended in the slurry for a ceramic green sheet in an amount of 0.1 to 10 weight %. When the plasticizer is less than 0.1 weight %, the obtained ceramic green sheet may be insufficient in flexibility, and when it is more than 10 weight %, operability in forming the ceramic green sheet may deteriorate.

The above-mentioned solvent is not particularly limited as long as it dissolves polyvinyl acetal and provides the slurry for a ceramic green sheet with an adequate kneading property, and as the solvent, there are given ketones such as acetone, methyl ethyl ketone, and the like; alcohols such as methanol, ethanol, isopropanol, n-propanol, n-butanol; aromatic hydrocarbons such as toluene, xylene, and the like, and the like. These solvents may be used alone or in combination of two or more kinds. The above solvent is preferably blended in the slurry for a ceramic green sheet in an amount of 20 to 80 weight %.

The slurry for a ceramic green sheet of the invention may include a lubricant, a dispersant, a deflocculant, a wetting agent, an antistatic agent, an antifoaming agent and the like as required within the limits capable of attaining the object.

The ceramic green sheet can be prepared by deaerating the slurry for a ceramic green sheet of the invention as required, then applying the slurry to the surface of a supporting element such as a polyester film or a steel plate from which the adhesive is removable, and removing the organic solvent through heating and drying. Such a ceramic green sheet is also a part of the present invention.

The invention also provides a primer composition for a plastic lens containing the polyvinyl acetals of the invention, the hydrolyzable organosilane compound or hydrolysate thereof, the organometallic alkoxide compound, inorganic micro particles, and the curing catalyst.

An amount of the polyvinyl acetals of the invention to be blended in the primer composition for a plastic lens of the ninth invention is preferably 0.1 to 20 weight %. When the amount of the polyvinyl acetals is less than 0.1 weight %, improvement of impact strength may be insufficient since the thickness of a primer layer to be obtained becomes too thin, and when it is more than 20 weight %, coating to plastic optical devices may become difficult since the viscosity becomes too high or the uniformity of a coated surface may be impaired since the thickness of a primer layer becomes too thick. It is preferably 1 to 10 weight %.

The above-mentioned hydrolyzable organosilane compound or hydrolysate thereof has a role as a crosslinking agent. That is, silanol group is produced by hydrolysis of hydrolytic group in the hydrolyzable organosilane compound, and the silanol group reacts with the above organometallic alkoxide compound, and further causes dehydrated condensation with hydroxyl group in polyvinyl acetal by actions of catalyst and heat, and therefore crosslinking occurs between molecules or in a molecule. Further, a functional group existing in the polyvinyl acetals of from the first to the third invention, for example carboxyl group, is present in a free state in a molecule and thereby it is possible to form a coating which is superior in cohesion with a substrate through the functional group. A molecule, which concerns crosslinking, is hydrolysate or condensate of an organosilane compound.

As the above-mentioned organosilane compound, there are given, for example, halosilane compounds of which hydrolytic group is a halogen atom, alkoxysilane compounds of which hydrolytic group is alkoxy group, carboxysilane compounds of which hydrolytic group is carboxy group, and ketoxymsilane compounds of which hydrolytic group is ketoxym group. Among them, alkoxysilane compounds are favorable. Specifically, there are given, for example, dimethyldiethoxysilane, dimethyldiethoxysilane, diethyldimethoxysilane, diethyldiethoxysilane, phenylmethyldimethoxysilane, phenylmethydiethoxysilane, γ-chloropropylmethyldimethoxysilane, γ-chloropropylmethyldiethoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, γ-aminopropylmethyldimethoxysilane, γ-aminopropylmethyldiethoxysilane, methylvinyldimethoxysilane, methylvinyldiethoxysilane, γ-glycidoxypropylmethyldimethoxysilane, γ-glycidoxypropylmethyldiethoxysilane, methyltrimethoxysilane, methyltriethoxysilane, methyltripropoxysilane, methyltributoxysilane, methyltris(2-methoxyethoxy) silane, ethyltrimethoxysilane, ethyltriethoxysilane, ethyltripropoxysilane, ethyltributoxysilane, ethyltris(2-methoxyethoxy) silane, propyltrimethoxysilane, propyltriethoxysilane, butyltrimethoxysilane, butyltriethoxysilane, hexyltrimethoxysilane, hexyltriethoxysilane, vinyltrimethoxysilane, vinyltriethoxysilane, vinyltris(2-methoxyethoxy) silane, phenyltrimethoxysilane, phenyltriethoxysilane, γ-chloropropyltrimethoxysilane, γ-chloropropyltriethoxysilane, 3,3,3-trifluoropropyltrimethoxysilane, 3,3,3-trifluoropropyltriethoxysilane, γ-methacryloxypropyltrimethoxysilane, γ-methacryloxypropyltriethoxysilane, γ-aminopropyltrimethoxysilane, γ-aminopropyltriethoxysilane, γ-mercaptopropyltrimethoxysilane, γ-mercaptopropyltriethoxysilane, chloromethyltrimethoxysilane, chloromethyltriethoxysilane, (N-β-aminoethyl)-γ-aminopropyltrimethoxysilane, (N-β-aminoethyl)-γ-aminopropyltriethoxysilane, γ-glycidoxypropyltrimethoxysilane, γ-glycidoxypropyltriethoxysilane, (3,4-epoxycyclohexylmethyl)trimethoxysilane, (3,4-epoxycyclohexylmethyl)triethoxysilane, β-(3,4-epoxycyclohexylethyl)trimethoxysilane, β-(3,4-epoxycyclohexylethyl)triethoxysilane, tetramethoxysilane, tetraethoxysilane, tetrapropoxysilane and tetrabutoxysilane and the like.

And, as a specific example of the hydrolyzable organosilane compound, there are given 1,1-bis(trimethoxysilyl)ethane, 1,1-bis(triethoxysilyl)ethane, 1,2-bis(trimethoxysilyl)ethane, 1,2-bis(triethoxysilyl)ethane, 1,3-bis(trimethoxysilyl)propane, 1,3-bis(triethoxysilyl)propane, 2,2-bis(trimethoxysilyl)propane, and 2,2-bis(triethoxysilyl)propane and the like.

An amount of the organosilane compound to be blended in the primer composition for a plastic lens of the invention is preferably 0.01 to 10 weight %, and more preferably 0.1 to 5 weight %.

As the above-mentioned organometallic alkoxide compound, there are used alkoxide compounds of aluminum or titanium or alkoxide diketonate compound. The organometallic alkoxide compound reacts readily with an organosilane compound or hydrolysis condensate thereof and product of reaction reacts with hydroxyl group in polyvinyl acetal by actions of catalyst and heat. It is considered that the organometallic alkoxide compound has an action as catalyst promoting dehydrated condensation of silanol group in the organosilane compound, which is produced by hydrolysis, and hydroxyl group in polyvinyl acetal and an action as a crosslinking agent, which hydrolysis condenses with the organosilane compound.

As the above-mentioned organometallic alkoxide compound, there are given aluminum trimethoxide, aluminum triethoxide, aluminum tripropoxide, aluminum tributoxide, titanium tetramethoxide, titanium tetraethoxide, titanium tetrapropoxide, titanium tetrabutoxide, aluminum dipropoxide acetylacetonate, aluminum dipropoxide ethylacetacetate, aluminum dibutoxide acetylacetonate, aluminum dibutoxide ethylacetacetate, titanium dimethoxidebis(acetylacetonate), titanium diethoxidebis (acetylacetonate), titanium dipropoxidebis(acetylacetonate), titanium dibutoxidebis(acetylacetonate), titanium dipropoxidebis (ethylacetacetate), and titanium dibutoxidebis (ethylacetacetate). Among them, titanium alkoxide is favorably used. These organometallic alkoxide compounds may be used alone or in combination of two or more kinds.

An amount of the above organometallic alkoxide compound to be blended is preferably 0.01 to 10 weight %, and more preferably 0.1 to 3 weight %. Further, this amount is preferably 50 mole% or less relative to the organosilane compound. When it is more than 50 mole%, impact resistance of the primer layer to be obtained may be deteriorated.

As the above-mentioned inorganic micro particles, there are given micro particles of compound oxides such as BaTiO₃, SrTiO₃, BaZrO₃, CoFe₂O₄, NiFe₂O₄, MnFe₂O₄, or micro particles of compound oxide solid solution such as (Ba,Sr)TiO₃, Sr(Ti,Zr) O₃, (Mn, Zn)Fe₂O₄ and the like. These inorganic micro particles may be used alone or in combination of two or more kinds. These micro particles of compound oxides or micro particles of compound oxide solid solution is easily prepared from a corresponding metal alkoxide compound by a sol-gel method.

A mean particle diameter of the above-mentioned inorganic micro particles is preferably 1 to 300 nm. When it is larger than 300 nm, there is possibility that cloud of a lens may arises by scattering of light. It is more preferably 1 to 50 nm.

An amount of the above-mentioned inorganic micro particles to be blended is preferably 0.1 to 30 weight % as a concentration of solid matter. A kind and an addition rate of the inorganic micro particles is selected in such a way that a refractive index of the primer layer to be obtained is coincident with or extremely close to a refractive index of a plastic lens. For example, in the case of a plastic lens with a high refractive index of 1.60 or more, it is preferred to add 1 to 5 parts by weight of the inorganic micro particles to 1 parts by weight of the polyvinyl acetals of the invention.

The above-mentioned curing catalyst is not specifically limited as long as it promotes dehydrated condensation of hydrolysis condensate of an organosilane compound and an organometallic alkoxide compound and hydroxyl group in polyvinyl acetal, and dehydrated condensation reaction between silanol groups, and as the curing catalyst, there are given organic tin compounds such as dibutyltin dilaurate, dibutyltin dioctate, dibutyltin diacetate, and the like; organic amines such as propylamine, butylamine, dipropylamine, dibutylamine, triethanolamine, tetramethylguanidine, methylimidazole, dicyandiamide, and the like; organometallic complexes such as aluminum acetylacetonate, iron acetylacetonate, and the like. Among them, organic tin compounds are favorable. These may be used alone or in combination of two or more kinds.

An amount of the above-mentioned curing catalyst to be added is preferably 0.002 to 10 weight %, and more preferably 0.005 to 1 weight %.

The solvent of the primer composition for a plastic lens of the invention is not specifically limited as long as it can adequately dissolve polyvinyl acetal and disperse inorganic micro particles, and as the solvent, there are given hydrocarbons, halogenated hydrocarbons, alcohols, ketones, esters, ethers, and the like. Among them, methanol, ethanol, propanol, butanol, hexanol, methyl cellosolve and ethyl cellosolve are favorably used. These solvents may be used alone or in combination of two or more kinds.

To the primer composition for a plastic lens of the invention was added water as a component required for hydrolysis of an organosilane compound. An amount of the water to be added is preferably 0.1 to 20 weight %. When the amount of the water addition is less than 0.1 weight %, the length of time that the primer solution can be used may become shorter, and when it is more than 20 weight %, smoothness of the primer-coated surface may be lost.

In the primer composition for a plastic lens of the invention, publicly known additives for enhancing film performances and adding functions such as various leveling agents for the purpose of an improvement of a coating property, an ultraviolet absorber and an antioxidant for the purpose of an improvement of weather resistance, a dye, a pigment, a photochromic dye and a photochromic pigment, can be used in combination.

A method of of applying the primer composition for a plastic lens of the invention to plastic optical devices is not specifically limited and a publicly known method such as spin coating, dipping and the like can be used. The surface of the plastic optical device to be coated is preferably pre-treated by alkali-treatment, plasma-treatment, ultraviolet-treatment, and the like as required. With respect to the above-mentioned plastic optical device, both a material and a method of forming thereof are not specifically limited.

To form the primer layer by curing the primer composition for a plastic lens, which is applied to the surface of the above plastic optical device, the primer layer may be heated at 50 to 120°C, preferably 70 to 110°C, for 1 to 60 minutes. By heat treatment, an organosilane compound hydrolyzed in the coated primer composition for a plastic lens, a hydrolysis condensate of a organotitanate compound and hydroxyl group contained in the polyvinyl acetal are dehydration condensed, and therefore a polyvinyl acetal molecule is cross-linked and simultaneously water produced by a dehydrated r condensation and an organic solvent and water previously contained in the primer composition are evaporated to form the primer layer of the polyvinyl acetal three-dimensionally crosslinked on the surface of the plastic optical device.

The plastic optical device provided with the above primer layer may be coated with a hard coat layer by a publicly known method in order to enhance the surface hardness thereof. A plastic lens in which the hard coat layer is formed on the both surfaces of the plastic lens substrate, wherein the primer layer using the primer composition for a plastic lens of the ninth invention is formed between the above plastic lens substrate and the above hard coat layer, is also a part of the present invention. Further, a vapor deposition film of an inorganic compound, which has a anti-reflection performance, may be formed on the surface provided with the hard coat layer by a publicly known method.

The reason why impact resistance of the plastic optical devices provided with the primer layer consisting of the primer composition for a plastic lens of the ninth invention is significantly enhanced is considered to be that the polyvinyl acetals of from the first to the third invention, which is a principal ingredient in the primer composition for a plastic lens, has high flexibility and in addition that because a high modulus of elasticity is developed by crosslinking between molecules or in a molecule due to the occurrence of dehydrated condensation of hydroxyl group in the polyvinyl acetals of the invention, when there is an impact on the plastic optical devices, the primer layer can absorb the impact energy. And, because the primer layer consisting of the primer composition for a plastic lens of the ninth invention is three-dimensionally crosslinked, polyvinyl acetal or another material does not dissolve in and contaminate a hard coating solution when conducting hard coating by a wet method. Further, it is considered that because the polyvinyl acetals of the invention has an adequate hydroxyl group, and further has an ionic group in a molecule, three-dimensional cross-linking is possible and simultaneously adequate cohesion between the primer layer and the plastic optical device and between the primer layer and the hard coat layer is attained.

The invention also provides a recording material for water-based ink provided with an ink receiving layer on its supporting element, in which the aforementioned ink receiving layer comprises the polyvinyl acetals of the invention, the water-soluble epoxy compound and the composition containing at least one kind of micro particles selected from the group consisting of silicic acid, silica, kaolin, clay, alumina, calcium carbonate, zeolite, titanium oxide, talc and spherical polymer.

The above-mentioned supporting element is not specifically limited, and as the supporting element, there are given film or sheet formed from synthetic resins such as polyethylene terephthalate (PET), polystyrene, polyvinyl chloride, polymethyl methacrylate, cellulose acetate, polyethylene, polypropylene, nylon, polycarbonate, ABS, and the like; and a substrate formed from weave, nonwoven fabric, fibers, cloth, synthetic paper, a glass plate, a metal plate, woods, and the like. With respect to the above supporting element, its surface may be previously subject to oxidation treatment by corona discharge or an adhesive resin layer may be provided on the supporting element in order to enhance the adhesion between the supporting element and the ink receiving layer.

The above-mentioned ink receiving layer is based on the polyvinyl acetals of the invention and composed of a resin composition containing the water-soluble epoxy compound and micro particles.

As the above-mentioned water-soluble epoxy compound, a water-soluble epoxy compound having two or more epoxy groups is favorable, and for example, 1,4-butanediol glycidyl ether, bisphenol A epichlorohydrin epoxy resin, trimethylolpropane polyglycidyl ether, neopentyl glycol diglycidyl ether, glycerol polyglycidyl ether, glycerol diglycidyl ether, propylene glycol diglycidyl, polypropylene glycol diglycidyl ether, ethylene glycol diglycidyl ether, polyethylene glycol diglycidyl ether, sorbitol polyglycidyl ether, trimethylolpropane and polyglycidyl ether are given.

An amount of the above-mentioned water-soluble epoxy compound to be blended is preferably 15 to 40 parts per 100 parts by weight of polyvinyl acetal of the invention. When this amount less than 15 parts by weight, fixing property of the water-based pigment ink may become insufficient, and when it is more than 40 parts by weight, a reaction of the polyvinyl acetal with the water-soluble epoxy compound proceed excessively and water resistance of the recording material becomes intensive, and therefore this may cause the surface of the ink receiving layer to repel the water-based dye ink.

As the above-mentioned micro particles, there are used at least one kind of selected from the group consisting of silicic acid, silica, kaolin, clay, alumina, calcium carbonate, zeolite, titanium oxide, talc and spherical polymer.

The above-mentioned spherical polymer is not specifically limited, and as the spherical polymer, there are given polymethyl methacrylate, methyl methacrylate-ethyl methacrylate copolymer, polystyrene, polymethacrylate ester, sodium polyacrylate and the like.

Preferably, the above micro particles have a mean particle diameter of 5 to 25 µm. When the mean particle diameter is less than 5 µm, an effect of improving the blocking resistance in taking up moisture by adding the micro particles may not be adequately attained, and when it is more than 25 µm, clearness and gloss may be deteriorated since the particle diameter of the micro particles is large.

An amount of the above-mentioned micro particles to be blended is preferably 0.1 to 1.0 parts by weight per 100 parts by weight of the total of the solid contents of the polyvinyl acetal of the invention and the above water-soluble epoxy compound. When this amount is less than 0.1 parts by weight, an effect of improving the blocking resistance in taking up moisture by adding the micro particles may not be adequately attained, and when it is more than 1.0 parts by weight, clearness and gloss may be deteriorated.

Various additives may be added to a composition composing above ink receiving layer within limits not inhibiting an object of the tenth invention. As the above-mentioned additive, there are given glycerin, ethylene glycol, polyethylene glycol, a surfactant, an ultraviolet absorber, a pigment dispersant, an antifoaming agent, an antiseptic, a pH adjuster, an antiblocking agent and the like.

The recording material for water-based ink of the invention can be prepared by applying a composition for the recording material for water-based ink comprising the polyvinyl acetals of the invention, the above-mentioned water-soluble epoxy compound and the above-mentioned micro particles to the above-mentioned supporting element and forming the ink receiving layer through drying. A method of preparing the above-mentioned composition for recording material for water-based ink is not specifically limited, and the composition for recording material for water-based ink can be obtained, for example, by adding the above water-soluble epoxy compound and micro particles to polyvinyl acetal and mixing adequately.

A method of applying the above-mentioned composition for the recording material for water-based ink to the above-mentioned supporting element is not specifically limited and a publicly known method such as roll coater technique, blade coater technique and the like can be used.

Preferably, an amount of the above composition for the recording material for water-based ink to be coated falls within such a range that an amount of the ink receiving layer formed after drying becomes 0.5 to 25 g/m². When this amount is less than 0.5 g/m², bleeding may occur because an amount of the ink absorbed is not sufficient, and when it is more than 25 g/m², water resistance of the recording material may be deteriorated or curling, in which the recording material bends into a cylindrical form, may occur since hygroscopicity in an atmosphere of high humidity increases.

Drying temperature of the above composition for the recording material for water-based ink is preferably 80 to 150°C. When this temperature is lower than 80°C, water resistance of the recording material may become insufficient since an ionic group contained in the polyvinyl acetal reacts hard with the water-soluble epoxy compound, and when it is more than 150°C, the ink receiving layer may be deteriorated by heat or ink absorbency of the recording material may be deteriorated since a reaction of the polyvinyl acetal with the water-soluble epoxy compound proceeds excessively. And, drying time of the above composition for the recording material for water-based ink is preferably 1 to 10 minutes. When this time is less than 1 minute, the ink receiving layer itself may become insufficient in drying and water resistance of the recording material may become insufficient since the polyvinyl acetal reacts with the water-soluble epoxy compound insufficiently. When it is more than 10 minutes, ink absorbency of the recording material may be deteriorated since a reaction of the polyvinyl acetal with the water-soluble epoxy compound proceeds excessively.

Since in the recording material for water-based ink of the tenth invention, the ink receiving layer is composed of a composition, which is based on the polyvinyl acetals of from the first to the third inventions and formed by adding the above water-soluble epoxy compound and the above micro particles, clear print can be attained even when print was conducted using any one of water-based dye ink or water-based pigment ink. Further, even when print was conducted in a printer, which uses much ink adhered per a unit area like the case where it is used to an ink-jet printer for a wide format larger than A0 size, bleeding and beading of ink occurs hard and ink fixing property is superior because the polyvinyl acetal contains a functional group (an ionic group).

The above-mentioned water-based dye ink is not specifically limited, and as the water-based dye ink, there are given substances consisting of water-soluble dye, water, another water-miscible organic solvent, a wetting agent, a dye-solubilizing agent and a fungicide. And, the above-mentioned water-based pigment ink is not specifically limited, and as the water-based pigment ink, there are given substances consisting of pigment, water, another water-miscible organic solvent, a wetting agent, a pigment dispersant and a fungicide.

An adhesive for metal foil, which contains the polyvinyl acetals of the invention, a thermosetting resin, and a solvent is also provided.

As the above-mentioned thermosetting resin, a publicly known resin can be used as long as resins are commonly used in adhesives for a printed circuit board, and generally, phenolic resin, epoxy resin, urea resin, melamine resin, and urethane resin are favorably used. These may be used alone or in combination of two or more kinds. Further, to improve the thermosetting property further, various multifunctional isocyanate compounds may be simultaneously used.

A blending ratio by weigh of the polyvinyl acetals of the invention to the above-mentioned thermosetting resin is preferably 1:4 to 4:1. When the rate of the polyvinyl acetal becomes less, peeling strength may be deteriorated because of the insufficient flexibility of an adhesive layer, and when it becomes more, the solder heat resistance may be deteriorated because of the insufficient curing degree of an adhesive layer.

As the above solvent, there are given ketones such as acetone, methyl ethyl ketone, and the like; alcohols such as methanol, ethanol, butanol, and the like; aromatic hydrocarbons such as toluene, xylene, and the like. These may be used alone or in combination of two or more kinds.

The adhesive for metal foil of the invention can be obtained by blending the polyvinyl acetals of the invention, the above thermosetting resin and a solvent by a conventionally publicly known method. And, an appropriate additive such as a stabilizer, an antioxidant, a crosslinking agent, a curing catalyst, a fire retardant, and the like, which are commonly used in adhesives for printed circuit board, may be added to the adhesive for metal foil of the invention as required.

### BEST MODE FOR CARRYING OUT THE INVENTION

Hereinafter, the present invention will be described in detail by way of examples, but the present invention is not limited to these examples.

### Example 1

To 2749.7 ml of distilled water in a five liter separable flask was charged 273.9 g of polyvinyl alcohol of which one end is carboxylic acid modified by more than 90% (manufactured by KURARAY CO., LTD.; acetyl group content 1.1 mole%, sodium acetate content 0.1 %), and the mixture was raised in temperature over 90°C and dissolved thoroughly. Next, a temperature of the solution was lowered to 25°C, and 70.3 g of 35% concentrated hydrochloric acid was charged to the solution in a single step as a catalyst. Then, the solution was further cooled and 176.1 g of n-butyl aldehyde was added to the solution in parts. On the way, 35% concentrated hydrochloric acid was diluted to 230 ml and added to the solution to promote a reaction, and a temperature of the solution was raised to about 25°C and kept at this temperature for five hours, and resulting white powder was precipitated. Next, the resulting white powder was washed with water at 50°C for 4 hours and neutralized with sodium carbonate aqueous solution so as to have a pH of above 7. Then, the white powder was washed with deionized water, filtered and dried to obtain polyvinyl acetal resin.

Incidentally, in the resulting polyvinyl acetal resin, a polymerization degree was 220, a degree of acetalization was 70.4 mole%, the content of acetyl group was 1.2 mole%, and a vinyl alcohol unit was 28.4 mole%.

### Example 2

To 2747.8 ml of distilled water in a five liter separable flask were charged 27.4 g of polyvinyl alcohol of which one end is carboxylic acid modified by more than 90% (manufactured by KURARAY CO., LTD.; acetyl group content 1.1 mole%, sodium acetate content 0.1 %) and 248.4 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Next, a temperature of the solution was lowered to 25°C, and 70.3 g of 35% concentrated hydrochloric acid was charged to the solution in a single step as a catalyst. Then, the solution was further cooled and 176.0 g of n-butyl aldehyde was added to the solution in parts. Polyvinyl acetal resin was obtained by following the same procedure as that of Example 1 for the remainder of the procedure.

Incidentally, in the resulting polyvinyl acetal resin, a polymerization degree was 220, a degree of acetalization was 71.3 mole%, the content of acetyl group was 1.0 mole%, and a vinyl alcohol unit was 27.7 mole%.

### Example 3

To 2748 ml of distilled water in a five liter separable flask were charged 54.8 g of polyvinyl alcohol of which one end is carboxylic acid modified by more than 90% (manufactured by KURARAY CO., LTD.; acetyl group content 1.1 mole%, sodium acetate content 0.1 %) and 220.8 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Polyvinyl acetal resin was obtained by following the same procedure as that of Example 2 for the remainder of the procedure.

Incidentally, in the resulting polyvinyl acetal resin, a polymerization degree was 220, a degree of acetalization was 71.0 mole%, the content of acetyl group was 1.1 mole%, and a vinyl alcohol unit was 27.9 mole%.

### Example 4

To 2748.2 ml of distilled water in a five liter separable flask were charged 82.2 g of polyvinyl alcohol of which one end is carboxylic acid modified by more than 90% (manufactured by KURARAY CO., LTD.; acetyl group content 1.1 mole%, sodium acetate content 0.1 %) and 193.2 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Polyvinyl acetal resin was obtained by following the same procedure as that of Example 2 for the remainder of the procedure.

Incidentally, in the resulting polyvinyl acetal resin, a polymerization degree was 220, a degree of acetalization was 72.0 mole%, the content of acetyl group was 1.1 mole%, and a vinyl alcohol unit was 26.9 mole%.

### Example 5

To 2748 ml of distilled water in a five liter separable flask were charged 136.9 g of polyvinyl alcohol of which one end is carboxylic acid modified by more than 90% (manufactured by KURARAY CO., LTD.; acetyl group content 1.1 mole%, sodium acetate content 0.1 %) and 138.7 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Polyvinyl acetal resin was obtained by following the same procedure as that of Example 2 for the remainder of the procedure.

Incidentally, in the resulting polyvinyl acetal resin, a polymerization degree was 220, a degree of acetalization was 72.0 mole%, the content of acetyl group was 1.1 mole%, and a vinyl alcohol unit was 26.9 mole%.

### Example 6

To 2749 ml of distilled water in a five liter separable flask were charged 205.6 g of polyvinyl alcohol of which one end is carboxylic acid modified by more than 90% (manufactured by KURARAY CO., LTD.; acetyl group content 1.1 mole%, sodium acetate content 0.1 %) and 69 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Polyvinyl acetal resin was obtained by following the same procedure as that of Example 2 for the remainder of the procedure.

Incidentally, in the resulting polyvinyl acetal resin, a polymerization degree was 220, a degree of acetalization was 72.0 mole%, the content of acetyl group was 1.3 mole%, and a vinyl alcohol unit was 26.7 mole%.

### Comparative Example 1

To 2747.9 ml of distilled water in a five liter separable flask was charged 275.6 g of non-modified polyvinyl alcohol of which ends are not modified (manufactured by KURARAY CO., LTD.; acetyl group content 1.0 mole%, sodium acetate content 0.1 %), and the mixture was raised in temperature over 90°C and dissolved thoroughly. Next, a temperature of the solution was lowered to 25°C, and 70.4 g of 35% concentrated hydrochloric acid was charged to the solution in a single step as a catalyst. Polyvinyl acetal resin was obtained by following the same procedure as that of Example 1 for the remainder of the procedure.

Incidentally, in the resulting polyvinyl acetal resin, a polymerization degree was 220, a degree of acetalization was 67.2 mole%, the content of acetyl group was 0.9 mole%, and a vinyl alcohol unit was 31.9 mole%.

### Example 7

To 2749 ml of distilled water in a five liter separable flask were charged 136.9 g of polyvinyl alcohol of which one end is carboxylic acid modified by more than 90% (manufactured by KURARAY CO., LTD.; acetyl group content 1.1 mole%, sodium acetate content 0.1 %) and 139.5 g of non-modified polyvinyl alcohol of which ends are not modified (manufactured by KURARAY CO., LTD.; acetyl group content 3.3 mole%, sodium acetate content 0.1 %), and the mixture was raised in temperature over 90°C and dissolved thoroughly. Polyvinyl acetal resin was obtained by following the same procedure as that of Example 2 for the remainder of the procedure.

Incidentally, in the resulting polyvinyl acetal resin, a polymerization degree was 220, a degree of acetalization was 69.0 mole%, the content of acetyl group was 2.3 mole%, and a vinyl alcohol unit was 28.7 mole%.

### Comparative Example 2

To 2747.2 ml of distilled water in a five liter separable flask was charged 276.0 g of non-modified polyvinyl alcohol of which ends are not modified (manufactured by KURARAY CO., LTD.; acetyl group content 3.3 mole%, sodium acetate content 0.1 %), and the mixture was raised in temperature over 90°C and dissolved thoroughly. Next, a temperature of the solution was lowered to 25°C, and 70.4 g of 35% concentrated hydrochloric acid was charged to the solution in a single step as a catalyst. Polyvinyl acetal resin was obtained by following the same procedure as that of Example 1 for the remainder of the procedure.

Incidentally, in the resulting polyvinyl acetal resin, a polymerization degree was 220, a degree of acetalization was 66.3 mole%, the content of acetyl group was 3.0 mole%, and a vinyl alcohol unit was 30.7 mole%.

### Example 8

Polyvinyl acetal resin was obtained by following the same procedure as that of Example 1 except that polyvinyl alcohol, which was amino group modified, was used in place of polyvinyl alcohol of which one end is carboxylic acid modified by more than 90%.

Incidentally, in the resulting polyvinyl acetal resin, a polymerization degree was 220, a degree of acetalization was 70.0 mole%, the content of acetyl group was 1.1 mole%, and a vinyl alcohol unit was 28.9 mole%.

### Example 9

Polyvinyl acetal resin was obtained by following the same procedure as that of Example 1 except that polyvinyl alcohol of which both ends were functional group modified, was used in place of polyvinyl alcohol of which one end is carboxylic acid modified by more than 90%.

Incidentally, in the resulting polyvinyl acetal resin, a polymerization degree was 220, a degree of acetalization was 71.0 mole%, the content of acetyl group was 1.1 mole%, and a vinyl alcohol unit was 29.1 mole%.

### Example 10

Polyvinyl acetal resin was obtained by following the same procedure as that of Example 1 except that polyvinyl alcohol, which had two carboxylic acids at one end, was used in place of polyvinyl alcohol of which one end is carboxylic acid modified by more than 90%.

Incidentally, in the resulting polyvinyl acetal resin, a polymerization degree was 220, a degree of acetalization was 70.0 mole%, the content of acetyl group was 1.2 mole%, and a vinyl alcohol unit was 28.8 mole%.

### Comparative Example 3

Polyvinyl acetal resin was obtained by following the same procedure as that of Example 1 except that polyvinyl alcohol, which had one carboxylic acid in a main chain, was used in place of polyvinyl alcohol of which one end is carboxylic acid modified by more than 90%.

Incidentally, in the resulting polyvinyl acetal resin, a polymerization degree was 220, a degree of acetalization was 70.0 mole%, the content of acetyl group was 1.0 mole%, and a vinyl alcohol unit was 29.0 mole%.

4.4 g of the polyvinyl acetal obtained in Examples 1 to 10 and Comparative Examples 1, 2 and 3 and 25.6 g of ethanol were put in a glass bottle and stirred for a day, and then 10 g of a pigment and glass beads were charged to the solution and the pigment was dispersed by shaking the bottle for 90 minutes with the paint shaker (manufactured by Red Devil Company). Next, 8.5 g of ethyl acetate was additionally charged and further a small amount of additive was charged to the solution, and the mixture was shaked for 60 minutes to prepare ink. Here, the glass beads were chaged in an amount of one-and-half times total weight of polyvinyl acetal, ethanol and ethyl acetate.

The resulting ink was evaluated on the following performances. Results of the evaluation are shown in Table 1.

### (1) Measurement of ink viscosity

The viscosity (mPa) of the obtained ink was measured at a shear rate of 1000S⁻¹ using a Mechanical Spectrometer ("RMS-800" manufactured by Rheometric Scientific, Inc). As a geometry of a viscometer, a biaxial cylindrical type was used and measurements were conducted at 25°C.

Samples were inserted into the biaxial cylindrical vessel by the required amount with a pipet and left alone for 5 minutes with pre-shear being applied, and then measured.

Subsequently, the respective steady shear rate was applied to the sample. First, the steady shear rate was applied from a low-speed side (1 S⁻¹) to a high-speed side (1000 S⁻¹), and then the shear rate was applied from a high-speed side to a low-speed side. With respect to the viscosity behavior, measurements after application of a high-speed shear rate were adopted. The resulting viscosity was evaluated according to the following criteria.
⊚: viscosity is 100 MPa or lower
○: viscosity is 200 MPa or lower
×: viscosity is higher than 200 MPa

### (2) Evaluation of dispersibility of pigment

Red colored ink was applied to PET film (125 µm in thickness, manufactured by Toyobo Co., Ltd.) with a barcoater and immediately dried using a dryer to prevent whitening of a coating. Subsequently, a film thickness was ckecked, and the glossiness of 60 degrees measurement angle was measured using a gloss meter (manufactured by Suga Test Instruments Co., Ltd.) and was evaluated according to the following criteria.
⊚: glossiness of 60 degrees measurement angle is 100 or higher
○: glossiness of 60 degrees measurement angle is at least 80 and lower than 100
Δ: glossiness of 60 degrees measurement angle is at least 70 and lower than 80
×: glossiness of 60 degrees measurement angle is lower than 70

### (3) Change of ink with time

As an acceleration test replicating the ink condition in six months later, after the ink was left alone at 40°C for 72 hours, the viscosity and the glossiness of 60 degrees measurement angle of the ink were measured by the method of the above-mentioned (1) and (2).

The rate of change of ink viscosity (viscosity ratio) measured in the above (1) was determined, and the change of ink viscosity with time was rated according to the following criteria. Incidentally, when the rate of change before and after the test (viscosity ratio) is smaller than 15%, this ink can be considered to satisfy a performance as ink. It is more preferably smaller than 10%.
⊚: the rate of change of viscosity is smaller than 10%
○: the rate of change of viscosity is at least 10% and smaller than 15%
Δ: the rate of change of viscosity is at least 15% and smaller than 25%
×: the rate of change of viscosity is 25% or larger

And, the rate of change of dispersibility of pigment measured in the above (2) was determined, and this was considered as the change of dispersibility of ink pigment with time was rated according to the following criteria. Incidentally, when the rate of change of the glossiness of 60 degrees measurement angle before and after the test (viscosity ratio) is smaller than 10%, this ink can be considered to satisfy a performance as ink. It is more preferably smaller than 5%.
⊚: the rate of change is smaller than 5%
○: the rate of change is at least 5% and smaller than 10%
Δ: the rate of change is at least 10% and smaller than 15%
×: the rate of change is 15% or larger

**Table 1**

| | Ink viscosity (mPa) | Dispersibility of pigment | Change of ink with time(40°C.72hours) |
|---|---|---|---|
| Example 1 | 39 | ○ | ○ |
| Example 2 | 41 | ○ | ⊚ |
| Example 3 | 35 | ○ | ⊚ |
| Example 4 | 45 | ⊚ | ○ |
| Example 5 | 47 | ⊚ | ⊚ |
| Example 6 | 41 | ○ | ⊚ |
| Comparative Example 1 | 50 | Δ | Δ |
| Example 7 | 50 | ⊚ | ○ |
| Comparative Example 2 | 47 | Δ | Δ |
| Example 8 | 41 | ⊚ | ○ |
| Example 9 | 47 | ○ | ○ |
| Example 10 | 49 | ○ | ○ |
| Comparative Example 3 | 42 | ○ | ○ |

### Example 11

To 2749.7 ml of distilled water in a five liter separable flask was charged 273.9 g of polyvinyl alcohol of which one end is carboxyl group modified by more than 90% (manufactured by KURARAY CO., LTD.; acetyl group content 1.1 mole%, sodium acetate content 0.1 weight %), and the mixture was raised in temperature over 90°C and dissolved thoroughly. Next, a temperature of the solution was lowered to 25°C, and 70.3 g of 35% concentrated hydrochloric acid was charged to the solution in a single step as a catalyst. Then, the solution was further cooled and 176.1 g of n-butyl aldehyde was added to the solution in parts. On the way, 35% concentrated hydrochloric acid was diluted to 230 ml and added to the solution to promote a reaction, and a temperature of the solution was raised to about 25°C and kept at this temperature for five hours, and resulting white powder was precipitated.

Next, the resulting white powder was washed with water at 50°C for 4 hours and neutralized with sodium carbonate aqueous solution so as to have a pH of above 7. Then, the white powder was washed with deionized water, filtered and dried to obtain polyvinyl acetal.

The resulting polyvinyl acetal was dissolved in a mixed solvent of ethanol and toluene (ethanol : toluene = 1:1 (weight ratio)) in such a way that resin concentration in the solution is about 10 weight%, and a polyvinyl acetal film was prepared using the solution. This film was dried in a vacuum at 60°C for 2 to 3 hours to eliminate the solvent throughly and after being cooled, the composition of the film was determined by measuring the film with a FT-IR (manufactured by Horiba Ltd.). By this method, it was found that in the resulting polyvinyl acetal, a polymerization degree was 220, a degree of acetalization was 70.4 mole%, the content of acetyl group was 1.2 mole%, and a vinyl alcohol unit was 28.4 mole%.

Further, 4.4 g of the polyvinyl acetal obtained and 25.6 g of ethanol were put in a glass bottle and stirred for a day, and then 10 g of a pigment and glass beads were charged to the solution and a pigment was dispersed by shaking the bottle for 90 minutes with the paint shaker (manufactured by Red Devil Company). Next, 8.5 g of ehtyl acetate was additionally charged and further a small amount of additive was charged to the solution, and the mixture was shaked for 60 minutes to prepare a concentrated red colored ink. Here, the glass beads were chaged in an amount of one-and-half times total weight of polyvinyl acetal, ethanol and ethyl acetate. And, as a pigment, a red colored pigment (Red 57:1, "IrgariteRubine 4BFL", manufactured by Ciba Specialty Chemicals. K.K.) was used.

The resulting ink was measured on the viscocity, the dispersibility of a pigment and the change of ink with time by the above-mentioned method. Results of the evaluation are shown in Table 2.

### Comparative Example 4

Polyvinyl acetal was obtained by following the same procedure as that of Example 1 except that 275.6 g of non-modified polyvinyl alcohol of which ends are not modified (manufactured by KURARAY CO., LTD.; acetyl group content 1.0 mole%, sodium acetate content 0.1 weight %) was charged to 2747.9 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 12

Polyvinyl acetal was obtained by following the same procedure as that of Example 11 except that 277.8 g of polyvinyl alcohol of which one end is carboxyl group modified by more than 90% (manufactured by KURARAY CO., LTD; acetyl group content 3.2 mole%, sodium acetate content 0.1 weight %) was charged to 2772.3 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Comparative Example 5

Polyvinyl acetal was obtained by following the same procedure as that of Example 11 except that 275.9 g of polyvinyl alcohol of which main chain is carboxyl group modified (manufactured by KURARAY CO., LTD.; acetyl group content 3.2 mole%, sodium acetate content 0.1 weight %) was charged to 2774.2 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Comparative Example 6

Polyvinyl acetal was obtained by following the same procedure as that of Example 11 except that 272.8 g of polyvinyl alcohol (manufactured by KURARAY CO., LTD.; acetyl group content 2.8 mole%, sodium acetate content 0.1 weight %, non-modified polyvinyl alcohol of which ends are not modified by a functional group) was charged to 2777.4 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 13

Polyvinyl acetal was obtained by following the same procedure as that of Example 11 except that 136.9 g of polyvinyl alcohol of which one end is carboxyl group modified by more than 90% (manufactured by KURARAY CO., LTD.; acetyl group content 1.1 mole%, sodium acetate content 0.1 weight %) and 138.7 g of non-modified polyvinyl alcohol of which ends are not modified (manufactured by KURARAY CO., LTD.; acetyl group content 1.0 mole%, sodium acetate content 0.1 weight %, polymerization degree 230) were charged to 2748 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 14

Polyvinyl acetal was obtained by following the same procedure as that of Example 11 except that 82.2 g of polyvinyl alcohol of which one end is carboxyl group modified by more than 90% (manufactured by KURARAY CO., LTD.; acetyl group content 1.1 mole%, sodium acetate content 0.1 weight %) and 193.2 g of non-modified polyvinyl alcohol of which ends are not modified (manufactured by KURARAY CO., LTD.; acetyl group content 1.0 mole%, sodium acetate content 0.1 weight %, polymerization degree 230) were charged to 2748.2 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 15

Polyvinyl acetal was obtained by following the same procedure as that of Example 11 except that 54.8 g of polyvinyl alcohol of which one end is carboxyl group modified by more than 90% (manufactured by KURARAY CO., LTD.; acetyl group content 1.1 mole%, sodium acetate content 0.1 weight %) and 220.8 g of non-modified polyvinyl alcohol of which ends are not modified (manufactured by KURARAY CO., LTD.; acetyl group content 1.0 mole%, sodium acetate content 0.1 weight %, polymerization degree 230) were charged to 2748 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 16

Polyvinyl acetal was obtained by following the same procedure as that of Example 11 except that 27.4 g of polyvinyl alcohol of which one end is carboxyl group modified by more than 90% (manufactured by KURARAY CO., LTD.; acetyl group content 1.1 mole%, sodium acetate content 0.1 weight %) and 248.4 g of non-modified polyvinyl alcohol of which ends are not modified (manufactured by KURARAY CO., LTD.; acetyl group content 1.0 mole%, sodium acetate content 0.1 weight %, polymerization degree 230) were charged to 2748 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Example 17

Polyvinyl acetal was obtained by following the same procedure as that of Example 11 except that 27.4 g of polyvinyl alcohol of which one end is carboxyl group modified by more than 90% (manufactured by KURARAY CO., LTD.; acetyl group content 1.1 mole%, sodium acetate content 0.1 weight %) and 213.9 g of non-modified polyvinyl alcohol (A) of which ends are not modified (manufactured by KURARAY CO., LTD.; acetyl group content 1.6 mole%, sodium acetate content 1.36 weight %, polymerization degree 320) and 213.9 g of polyvinyl alcohol (B) of which ends are not modified (manufactured by KURARAY CO., LTD.; acetyl group content 12.2 mole%, sodium acetate content 0.8 weight %, polymerization degree 350) were charged to 2766.4 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Comparative Example 7

Polyvinyl acetal was obtained by following the same procedure as that of Example 11 except that 27.6 g of polyvinyl alcohol of which main chain is carboxyl group modified (manufactured by KURARAY CO., LTD.; acetyl group content 3.2 mole%, sodium acetate content 0.1 weight %) and 256.5 g of non-modified polyvinyl alcohol of which ends are not modified (manufactured by KURARAY CO., LTD.; acetyl group content 1.4 mole%, sodium acetate content 1.4 weight %, polymerization degree 230) were charged to 2735.2 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Comparative Example 8

Polyvinyl acetal was obtained by following the same procedure as that of Example 11 except that 271.9 g of polyvinyl alcohol (manufactured by KURARAY CO., LTD.; acetyl group content 1.4 mole%, sodium acetate content 1.4 weight %, polymerization degree 230) was charged to 2751.7 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

### Comparative Example 9

To 2835.9 ml of distilled water in a five liter separable flask was charged 282.1 g of polyvinyl alcohol (manufactured by KURARAY CO., LTD.; acetyl group content 1.4 mole%, sodium acetate content 1.4 weight %, polymerization degree 230), and the mixture was raised in temperature over 90°C and dissolved thoroughly. Next, a temperature of the solution was lowered to 25°C, and 75 g of 35% concentrated hydrochloric acid was charged to the solution in a single step as a catalyst. Then, 154 g of n-butyl aldehyde was added to the solution in parts. Polyvinyl acetal was obtained by following the same procedure as that of Example 11 for the remainder of the procedure.

Red colored ink was prepared in the same way as Example 11 using the resulting polyvinyl acetal and evaluated similarly. The results were shown in Table 2.

### Comparative Example 10

Polyvinyl acetal was obtained by following the same procedure as that of Example 11 except that 284.3 g of polyvinyl alcohol of which main chain is carboxyl group modified and which does not have a unit containing two or more carboxyl groups in a molecule (manufactured by KURARAY CO., LTD.; acetyl group content 1 mole%, sodium acetate content 0.1 weight %) was charged to 2735.2 ml of distilled water in a five liter separable flask and the mixture was raised in temperature over 90°C and dissolved thoroughly.

Red colored ink was prepared in the same way as Example 11 using the resulting polyvinyl acetal and evaluated similarly. The results were shown in Table 2.

**Table 2**

| | Ink viscosity (mPa) | | Dispersibility of pigment | Change with time (40°C, 72 hours) | |
|---|---|---|---|---|---|
| | | | | Ink viscosity | Dispersibility of pigment |
| Example 11 | 153 | O | ⊚ | ⊚ | ⊚ |
| Comparative Example 4 | 58 | ⊚ | Δ | × | O |
| Example 12 | 84 | ⊚ | ⊚ | ⊚ | ⊚ |
| Comparative Example 5 | 283 | × | ⊚ | ⊚ | ⊚ |
| Comparative Example 6 | 100 | O | × | Δ | × |
| Example 13 | 136 | O | O | ⊚ | ⊚ |
| Example 14 | 53 | ⊚ | O | O | O |
| Example 15 | 110 | O | O | O | O |
| Example 16 | 56 | ⊚ | O | Δ | O |
| Example 17 | 131 | O | O | ⊚ | ⊚ |
| Comparative Example 7 | 111 | O | O | × | × |
| Comparative Example 8 | 54 | ⊚ | × | × | ⊚ |
| Comparative Example 9 | 69 | ⊚ | Δ | Δ | O |
| Comparative Example 10 | 110 | O | ⊚ | ⊚ | ⊚ |

### Example 18

Blue colored ink was prepared in the same way as Example 11 except for using the polyvinyl acetal prepared in Example 11 and using a blue pigment (Blue 15:3, "Heliogen Blue D7080" manufactured by BASF Japan LTD), and evaluated similarly as the pigment. The results of evaluation were shown in Table 3.

### Comparative Example 11

Blue colored ink was prepared in the same way as Example 20 except for using the polyvinyl acetal prepared in Comparative Example 4, and evaluated similarly. The results were shown in Table 3.

### Example 19

Blue colored ink was prepared in the same way as Example 18 except for using the polyvinyl acetal prepared in Example 12, and evaluated similarly. The results were shown in Table 3.

### Comparative Example 12

Blue colored ink was prepared in the same way as Example 18 except for using the polyvinyl acetal prepared in Comparative Example 5, and evaluated similarly. The results were shown in Table 3.

### Comparative Example 13

Blue colored ink was prepared in the same way as Example 18 except for using the polyvinyl acetal prepared in Comparative Example 6, and evaluated similarly. The results were shown in Table 3.

### Comparative Example 14

Polyvinyl acetal was obtained by following the same procedure as that of Example 11 except that 276.4 g of polyvinyl alcohol of which main chain is carboxyl group modified (manufactured by KURARAY CO., LTD.; acetyl group content 7.2 mole%, sodium acetate content 0.1 weight %) was charged to 2779.2 ml of distilled water in a five liter separable flask and the mixture was raised in temperature over 90°C and dissolved thoroughly.

Blue colored ink was prepared in the same way as Example 18 except for using the resulting polyvinyl acetal and evaluated similarly. The results were shown in Table 3.

### Example 20

Blue colored ink was prepared in the same way as Example 18 except for using the polyvinyl acetal prepared in Example 13, and evaluated similarly. The results were shown in Table 3.

### Example 21

Polyvinyl acetal was obtained by following the same procedure as that of Example 11 except that 136.9 g of polyvinyl alcohol of which one end is carboxyl group modified by more than 90% (manufactured by KURARAY CO., LTD.; acetyl group content 1.1 mole%, sodium acetate content 0.1 weight %, polymerization degree 220) and 139.5 g of polyvinyl alcohol of which ends are modified by hydroxyl group (manufactured by KURARAY CO., LTD.; acetyl group content 3.3 mole%, sodium acetate content 1.36 weight %, polymerization degree 220) were charged to 2747.1 ml of distilled water in a five liter separable flask and the mixture was raised in temperature over 90°C and dissolved thoroughly.

Blue colored ink was prepared in the same way as Example 18 except for using the resulting polyvinyl acetal and evaluated similarly. The results were shown in Table 3.

### Example 22

Blue colored ink was prepared in the same way as Example 18 except for using the polyvinyl acetal prepared in Example 14, and evaluated similarly. The results were shown in Table 3.

### Example 23

Blue colored ink was prepared in the same way as Example 18 except for using the polyvinyl acetal prepared in Example 15, and evaluated similarly. The results were shown in Table 3.

### Example 24

Blue colored ink was prepared in the same way as Example 18 except for using the polyvinyl acetal prepared in Example 16, and evaluated similarly. The results were shown in Table 3.

### Example 25

Blue colored ink was prepared in the same way as Example 18 except for using the polyvinyl acetal prepared in Example 17, and evaluated similarly. The results were shown in Table 3.

### Comparative Example 15

Blue colored ink was prepared in the same way as Example 18 except for using the polyvinyl acetal prepared in Comparative Example 8, and evaluated similarly. The results were shown in Table 3.

### Comparative Example 16

Blue colored ink was prepared in the same way as Example 18 except for using the polyvinyl acetal prepared in Comparative Example 10, and evaluated similarly. The results were shown in Table 3.

**Table3**

| | Ink viscosity (mPa) | | Dispersibility of pigment | Change with time(40°C,72hours) | |
|---|---|---|---|---|---|
| | | | | Ink viscosity | Dispersibility of pigment |
| Example 18 | 53 | ○ | ⊚ | Δ | ⊚ |
| Comparative Example 11 | 55 | ○ | Δ | ⊚ | ⊚ |
| Example 19 | 39 | ⊚ | ⊚ | Δ | ⊚ |
| Comparative Example 12 | 99 | × | Δ | × | × |
| Comparative Example 13 | 47 | ⊚ | Δ | Δ | Δ |
| Comparative Example 14 | 59 | ○ | Δ | ○ | ○ |
| Example 20 | 57 | ○ | ○ | ⊚ | ⊚ |
| Example 21 | 50 | ⊚ | ○ | ○ | ○ |
| Example 22 | 55 | ○ | ○ | ○ | ○ |
| Example 23 | 43 | ⊚ | ○ | ○ | ○ |
| Example 24 | 45 | ⊚ | ○ | ⊚ | ○ |
| Example 25 | 83 | Δ | ○ | ⊚ | ⊚ |
| Comparative Example 15 | 41 | ⊚ | Δ | ○ | ⊚ |
| Comparative Example 16 | 42 | ⊚ | ⊚ | ○ | ⊚ |

### Example 26

5 g of polyvinyl acetal prepared in Example 11, 5 g of silver behenate and 40 g of diethyl ketone were mixed with a ball mill for 24 hours, and further 0.2 g of N-lauryl-1-hydroxy-2-naphthamide was added to the mixture and this mixture was again milled by the ball mill to obtain a coating solution.

The resulting coating solution was applied to a polyester substrate so as to be 10 µm in thickness after drying and dried. A solution consisting of 0.5 g of N,N-dimethyl-p-phenylenediamine sulfate and 2 g of polyvinylpyrrolidone and 30 ml of methanol was applied to this coated surface so as to be 1 µm in thickness after drying and dried to prepare a heat-developable photosensitive material.

The occurrence of coloring and the stability of the coating solution obtained with time were measured and the change in image of the heat-developable photosensitive material obtained was measured. Results are shown in Table 4.

### (4) Occurrence of coloring of coating solution

The coating solution was placed beneath an interior fluorescent lamp at a room temperature for three days and occurrences of coloring were observed.

### (5) Evaluation of stability of coating solution with time

The stability of the coating solution with time was rated according to the following criteria through measuring the viscosity in the same way as the case of change of ink with time described in the above-mentioned (1) and (3). And, in acceleration tests, evaluations were conducted after a day and two weeks.
⊚: the rate of change of viscosity is 15% or smaller
Δ: the rate of change of viscosity is larger than 15% and smaller than 25%
×: the rate of change of viscosity is 25% or larger

### (6) Change in image of heat-developable photosensitive material

The heat-developable photosensitive material was exposed through a tone pattern film to light from a high-voltage mercury lamp of 250 watt at a distance of 20 cm for 0.3 seconds from and then heated for 5 seconds with a hot plate of 120°C to obtain a good cyan pattern image. After the resulting image was exposed to white light, the change in image was observed.

### Comparative Example 17

A coating solution and a heat-developable photosensitive material were prepared in the same way as Example 26 except for using the polyvinyl acetal prepared in Comparative Example 4, and evaluated similarly. The results were shown in Table 4.

### Example 27

A coating solution and a heat-developable photosensitive material were prepared in the same way as Example 26 except for using the polyvinyl acetal prepared in Example 12, and evaluated similarly. The results were shown in Table 4.

### Comparative Example 18

A coating solution and a heat-developable photosensitive material were prepared in the same way as Example 26 except for using the polyvinyl acetal prepared in Comparative Example 5, and evaluated similarly. The results were shown in Table 4.

### Comparative Example 19

A coating solution and a heat-developable photosensitive material were prepared in the same way as Example 26 except for using the polyvinyl acetal prepared in Comparative Example 6, and evaluated similarly. The results were shown in Table 4.

### Example 28

A coating solution and a heat-developable photosensitive material were prepared in the same way as Example 26 except for using the polyvinyl acetal prepared in Example 13, and evaluated similarly. The results were shown in Table 4.

### Example 29

A coating solution and a heat-developable photosensitive material were prepared in the same way as Example 26 except for using the polyvinyl acetal prepared in Example 14, and evaluated similarly. The results were shown in Table 4.

### Comparative Example 20

A coating solution and a heat-developable photosensitive material were prepared in the same way as Example 26 except for using the polyvinyl acetal prepared in Comparative Example 8, and evaluated similarly. The results were shown in Table 4.

### Comparative Example 21

After 100 g of polyvinyl alcohol having a polymerization degree of 500 and a saponification degree of 98 mole% was raised in temperature and dissolved in 700 g of distilled water, the solution was kept at 20°C, and 29 g of 35% hydrochloric acid was added to the solution and further 14 g of butyl aldehyde was added to the solution. Next, the solution was cooled to 12°C and 64 g of butyl aldehyde was added to the solution. After resin was precipitated, the solution including precipitated resin was held for 30 minutes and then 108 g of hydrochloric acid was added to the solution, and the solution was raised to 30°C and kept at this temperature for 10 hours. After the completion of reaction, the solution including precipitated resin was washed with distilled water and sodium hydroxide was added to a dispersion of polyvinyl acetal resin washed with water and a pH of the solution was adjusted to 7. After the solution was held at 50°C for 10 hours, it was cooled. Then, the solution had a pH of 6.7. Next, the solution was washed with distilled water of amount of 100 times that of a solid content, and dehydrated and dried. Amounts of residual acetyl groups and residual hydroxyl groups of the resulting polyvinyl acetal were 1.7 mole% and 21 mole%, respectively. A coating solution and a heat-developable photosensitive material were prepared in the same way as Example 26 except for using the obtained polyvinyl acetal, and evaluated similarly. The results were shown in Table 4.

**Table 4**

| | Coating solution | | | Heat-developable photosensitive material |
|---|---|---|---|---|
| | Coloring | Stability with time | | Change in image |
| | | after a day | after two weeks | |
| Example 26 | none | ⊚ | Δ | none |
| Comparative Example 17 | present | × | × | with fog |
| Example 27 | none | ⊚ | ⊚ | none |
| Comparative Example 18 | slightly present | Δ | × | with fog |
| Comparative Example 19 | present | × | × | with fog |
| Example 28 | none | ⊚ | Δ | none |
| Example 29 | none | ⊚ | Δ | none |
| Comparative Example 20 | present | × | × | with fog |
| Comparative Example 21 | present | × | × | with fog |

### Example 30

10 parts by weight of the polyvinyl acetal prepared in Example 11 was added to a mixed solvent of toluene of 30 parts by weight and ethanol of 15 parts by weight, stirred and dissolved. 100 parts by weight of barium titanate powder, having a mean particle diameter of 0.4 µm, was added to the obtained resin solution as ceramic powder. This mixture was mixed for 36 hours with a ball mill and the barium titanate powder was dispersed to obtain a slurry composition for a ceramic green sheet.

The resulting slurry composition for a ceramic green sheet was applied to the polyester film, which had been treated for releasing, with a thickness of 6 mm and dried with winds at a room temperature for 30 minutes and further dried at 60 to 80°C for 15 hours with a hot air dryer to dry an organic solvent and a ceramic green sheet of a thin layer having a thickness of 3 µm was obtained.

Stability of the resulting slurry composition for a ceramic green sheet with time and a surface condition of the resulting ceramic green sheet were evaluated as follows. Results of the evaluation are shown in Table 5.

### (7) Evaluation of stability of a slurry composition for a ceramic green sheet with time

The stability of the slurry composition for a ceramic green sheet with time was rated according to the following criteria through measuring the viscosity in the same way as the case of change of ink with time described in the above-mentioned (1) and (3). And, in acceleration tests, evaluations were conducted after a day and two weeks.
⊚: the rate of change of viscosity is 15% or smaller
Δ: the rate of change of viscosity is larger than 15% and smaller than 25%
×: the rate of change of viscosity is 25% or larger

### (8) Evaluation of surface condition of a ceramic green sheet

Square samples in a size of 100mmx100mm were cut off from the ceramic green sheet and the condition of depressions on the surface of the samples was visually observed and evaluated according to the following criteria.
⊚: few depressions
Δ: a few depressions
×: a lot of depressions

### Comparative Example 22

A slurry composition for a ceramic green sheet and a ceramic green sheet were prepared in the same way as Example 30 except for using the polyvinyl acetal prepared in Comparative Example 4, and evaluated similarly. The results were shown in Table 5.

### Example 31

A slurry composition for a ceramic green sheet and a ceramic green sheet were prepared in the same way as Example 30 except for using the polyvinyl acetal prepared in Example 12, and evaluated similarly. The results were shown in Table 5.

### Comparative Example 23

A slurry composition for a ceramic green sheet and a ceramic green sheet were prepared in the same way as Example 30 except for using the polyvinyl acetal prepared in Comparative Example 5, and evaluated similarly. The results were shown in Table 5.

### Comparative Example 24

A slurry composition for a ceramic green sheet and a ceramic green sheet were prepared in the same way as Example 30 except for using the polyvinyl acetal prepared in Comparative Example 6, and evaluated similarly. The results were shown in Table 5.

### Example 32

A slurry composition for a ceramic green sheet and a ceramic green sheet were prepared in the same way as Example 30 except for using the polyvinyl acetal prepared in Example 13, and evaluated similarly. The results were shown in Table 5.

### Example 33

A slurry composition for a ceramic green sheet and a ceramic green sheet were prepared in the same way as Example 30 except for using the polyvinyl acetal prepared in Example 14, and evaluated similarly. The results were shown in Table 5.

### Comparative Example 25

A slurry composition for a ceramic green sheet and a ceramic green sheet were prepared in the same way as Example 30 except for using the polyvinyl acetal prepared in Comparative Example 8, and evaluated similarly. The results were shown in Table 5.

### Comparative Example 26

A slurry composition for a ceramic green sheet and a ceramic green sheet were prepared in the same way as Example 30 except for using the polyvinyl acetal prepared in Comparative Example 22, and evaluated similarly. The results were shown in Table 5.

**Table 5**

| | Slurry composition | | Sheet |
|---|---|---|---|
| | Stability with time | | Surface condition |
| | after a day | after two weeks | |
| Example 30 | ⊚ | Δ | ⊚ |
| Comparative Example 22 | × | × | × |
| Example 31 | ⊚ | ⊚ | |
| Comparative Example 23 | Δ | × | Δ |
| Comparative Example 24 | × | × | × |
| Example 32 | ⊚ | Δ | ⊚ |
| Example 33 | ⊚ | Δ | × |
| Comparative Example 25 | × | × | × |
| Comparative Example 26 | × | × | × |

### Example 34

To 2749.7 ml of distilled water in a five liter separable flask were charged 4.4 g of polyvinyl alcohol (A) of which one end is carboxyl group modified by more than 90% (polymerization degree 220, acetyl group content 1.1 mole%, sodium acetate content 0.1 weight %) and 271.2 g of polyvinyl alcohol (B) of which ends are not particularly controlled by carboxyl group (polymerization degree 220, acetyl group content 1.1 mole%, sodium acetate content 0.1 weight %), and the mixture was raised in temperature over 90°C and dissolved thoroughly. Next, a temperature of the solution was lowered to 40°C, and 70.3 g of 35% concentrated hydrochloric acid was charged to the solution in a single step as a catalyst. Then, the solution was further cooled and 176.1 g of n-butyl aldehyde was added to the solution in parts. On the way, 35% concentrated hydrochloric acid was diluted to 230 ml and added to the solution to promote a reaction, and a temperature of the solution was raised and kept at a constant temperature for five hours, and resulting white powder was precipitated.

Next, the resulting white powder was washed with water at 50°C for 4 hours and neutralized with sodium carbonate aqueous solution so as to have a pH of above 7. Then, the white powder was washed with deionized water, filtered and dried to obtain polyvinyl acetal.

Incidentally, in the resulting polyvinyl acetal resin, a polymerization degree was 1800, a degree of acetalization was 70.4 mole%, the content of acetyl group was 1.2 mole%, and a vinyl alcohol unit was 28.4 mole%.

The resulting polyvinyl acetal was dissolved in a mixed solvent containing water and isopropyl alcohol in a weight ratio of 6:4 to prepare a polyvinyl acetal solution. Next, ethylene glycol diglycidyl ether being a water-soluble epoxy compound was added to this polyvinyl acetal solution so as to be 30 parts by weight per 100 parts by weight of polyvinyl acetal, and further polymethyl methacrylate in micro particle form (particle diameter: 12 µm) was added to the mixture so as to be 0.4 parts by weight per 100 parts by weight of the total of the solid contents of the polyvinyl acetal and the water-soluble epoxy compound, and mixed. After this, the obtained resin mixture was applied to PET film having a thickness of 100 µm and dried at 120°C for 5 minutes to obtain a recording material for water-based ink weighing 12 g/cm² after being dried, which has an ink receiving layer.

### Comparative Example 27

Polyvinyl acetal was obtained by following the same procedure as that of Example 34 except that 275.6 g of polyvinyl alcohol which does not contain carboxyl group (polymerization degree 220, acetyl group content 1.1 mole%, sodium acetate content 0.1 %) was charged to 2747.9 ml of distilled water in a five liter separable flask and the mixture was raised in temperature over 90°C and dissolved thoroughly, and further a recording material for water-based ink was prepared using the resulting polyvinyl acetal.

### Example 35

Polyvinyl acetal was obtained by following the same procedure as that of Example 34 except that 17.6 g of polyvinyl alcohol (A) which contains carboxyl group at ends (polymerization degree 220, acetyl group content 3 mole%, sodium acetate content 0.1 weight %) and 258 g of polyvinyl alcohol (B) of which ends are not particularly controlled by carboxyl group (polymerization degree 220, acetyl group content 3 mole%, sodium acetate content 0.1 weight %) were charged to 2747.9 ml of distilled water in a five liter separable flask and the mixture was raised in temperature over 90°C and dissolved thoroughly, and further a recording material for water-based ink was prepared using the resulting polyvinyl acetal.

### Comparative Example 28

Polyvinyl acetal was obtained by following the same procedure as that of Example 34 except that 275.6 g of polyvinyl alcohol which does not contain carboxyl group (polymerization degree 220, acetyl group content 3 mole%, sodium acetate content 0.1 weight %) was charged to 2747.9 ml of distilled water in a five liter separable flask and the mixture was raised in temperature over 90°C and dissolved thoroughly, and further a recording material for water-based ink was prepared using the resulting polyvinyl acetal.

With respect to the recording materials for water-based ink prepared in Examples 34, 35 and Comparative Examples 27, 28, the performances on water resistance, bleeding, beading, surface condition of a printed portion, ink transfer, and clearness were evaluated by the following procedures. Results are shown in Table 6.

### (9) Water resistance of recording material for water-based ink

After a lapse of 24 hours since square ink receiving layer in a size of 30cmx30cm was dried and formed, the recording materials for water-based ink was immersed in running water for 60 minutes. The condition of the ink receiving layer just after picking up was visually observed. The results were evaluated according to the following rating symbols.
○: the ink receiving layer was not changed at all.
Δ: the ink receiving layer was swelled and partially peeled off from the supporting element.
×: the ink receiving layer was dissolved and run off from the supporting element.

### (10) Bleeding of recording material for water-based ink

The solidly shaded print was conducted in a size of 30cmx30cm on an ink receiving layer of A0 in size using water-based dye ink and water-based pigment ink, and with respect to an image portion formed, and the condition of the image portion after a lapse of 24 hours since print was visually observed and evaluated according to the following criteria.
⊚: size of "bleeding" in the periphery of the image portion is 50 µm or smaller.
○: size of "bleeding" in the periphery of the image portion is larger than 50 µm and 100 µm or smaller.
Δ: size of "bleeding" in the periphery of the image portion is larger than 100 µm and 300 µm or smaller.
×: size of "bleeding" in the periphery of the image portion is larger than 300 µm.

### (11) Occurrence of beading of recording material for water-based ink

The solidly shaded print was conducted in a size of 30cmx30cm on an ink receiving layer of A0 in size using water-based dye ink, and with respect to an image portion formed, and the condition of the image portion after a lapse of 24 hours since print was visually observed and evaluated according to the following criteria.
○: beading did not occur at all
Δ: beading having granularity formed by ink-coagulation occurred in a part of the image portion.
×: beading having granularity formed by ink-coagulation occurred throughout the image portion.

### (12) Surface condition of print portion

The solidly shaded print was conducted in a size of 30cmx30cm on an ink receiving layer of A0 in size using water-based dye ink, and with respect to an image portion formed, and the condition of the image portion after a lapse of 24 hours since print was visually observed and evaluated according to the following criteria.
○: there is not "crack" or "repellency" at all on the surface of the print.
Δ: there are "cracks" or "repellencies" in a part of the surface of the print.
×: there are "cracks" or "repellencies" throughout the surface of the print.

### (13) Ink transfer

The solidly shaded print was conducted in a size of 30cmx30cm on an ink receiving layer of A0 in size using water-based dye ink, and with respect to an image portion formed, paper for PPC was pushed against the image portion at 5 minutes after print and the condition of the ink transfer to paper was visually observed. The results were evaluated according to the following criteria.
○: ink transfer did not occur at all.
Δ: ink transfer is present partially.
×: ink transfer is present throughout the print portion.

### (14) Clearness

The condition of the ink receiving layer was visually observed. The results were evaluated according to the following criteria.
○: whole area is cloudless and clear.
Δ: there is cloud in a part of the ink receiving layer.
×: there is cloud like camphor glass throughout the whole area.

**Table 6**

| | Water resistance | Bleeding | Beading | Surface condition | Ink transfer | Clearness |
|---|---|---|---|---|---|---|
| Example 34 | ○ | ⊚ | ○ | ○ | ○ | Δ |
| Example 35 | ○ | ⊚ | ○ | ○ | ○ | ○ |
| Comparative Example 27 | ○ | Δ | Δ | Δ | Δ | ○ |
| Comparative Example 28 | ○ | Δ | × | × | Δ | Δ |

### Example 36

287.4 parts by weight of isopropanol, 43.9 parts by weight of barium isopropoxide and 48.9 parts by weight of titanium tetraisopropoxide are charged into a reactor in succession and the solution was heated and refluxed for two hours. After cooling the solution to a room temperature, 18.6 parts by weight of pure water was slowly dropped over 10 minutes to prepare micro particles of BaTiO₃ compound having a mean particle diameter of 20 to 30 nm. To this solution was added 1.2 parts by weight of diisobutyl amine as a stabilizer and further a solution formed by dissolving 20 parts by weight of the polyvinyl acetal obtained in Example 34 in 180 parts by weight of isopropanol, and the mixture was sufficiently stirred for one hour to yield 600 parts by weight of an isopropanol solution of BaTiO₃ / polyvinyl butyral.

Into this reactor was charged 4.3 parts by weight of methyltrimethoxysilane and 20 parts by weight of isopropanol, and 1.7 parts by weight of 0.01N hydrochloric acid was added to the solution and the solution was stirred for one hour and hydrolyzed.

A solution formed by dissolving 2.7 parts by weight of titanium tetra n-butoxide in 20 parts by weight of isopropanol was added to the obtained hydrolysate and the mixture was stirred for 30 minutes to obtain hydrolysis condensate of organoalkoxysilane / titaniumalkoxide. 600 parts by weight of BaTiO₃ / polyvinyl butyral solution, 2 parts by weight of dibutyltin dilaurate as a curing catalyst and 1 parts by weight of a levelling agent (manufactured by Sumitomo 3M Corporation: Fluorosurfactants Fluorad FC430) were added to the solution of the resulting hydrolysis condensate in succession. Further, 200 parts by weight of methanol, 108.3 parts by weight of isopropanol and 40 parts by weight of pure water were added to the solution in succession and the mixture was stirred for one hour. After this, the solution was filtered with a membrane filter of 3 µm to prepare a primer composition for a plastic lens.

On the other hand, into another reactor was charged 180 parts by weight of γ-glycidoxypropyltrimethoxysilane, and while the solution was strongly stirred with a magnetic stirrer, 40 parts by weight of 0.01N hydrochloric acid was added at once and hydrolysis of the solution was continued for one hour to obtain hydrolysate partially condensed.

630 parts by weight of SnO₂/WO₃ composite micro particle dispersion methanol sol (manufactured by NISSAN CHEMICAL INDUSTRIES, LTD.: HIS-30MN), 4 parts by weight of aluminum ethylenediaminetetraacetate as a curing catalyst and 0.45 parts by weight of a levelling agent (manufactured by Dow Corning Toray Silicone Co., Ltd.: Silicon surfactants SH30PA) were added to the obtained hydrolysate and the mixture was adequately stirred and mixed. After this, the solution was filtered with a membrane filter of 3 µm to prepare a silicon hard coat solution with a high refractive index.

Next, a plastic lens having a composite film was prepared according to the following procedure. A plastic lens for eyeglasses NLIV, made of thermosetting urethane resin, which has a power of -4.00 diopter, a central thickness of 1.0 mm and a refractive index of 1.66 was immersed in 10% NaOH aqueous solution of 60°C for 5 minutes as a pretreatment, washed with hot water and dried. The primer composition for a plastic lens was applied to the both surfaces of the dried plastic lens by dipping (updrawing speed 5 mm/s) and treated by heat at 90°C for 30 minutes and the primer was cured.

Silicon hard coat solution with a high refractive index was applied to the both surfaces of the obtained plastic lens having a primer layer by dipping (updrawing speed 5 mm/s). The coated lens was treated by heat at 100°C for 4 hours to cure the hard coat layer.

A five layered antireflection film of SiO₂/ZrO₂ was formed on the both surfaces of the obtained plastic lens having a primer layer and a hard coat layer by a vacuum evaporation method.

### Example 37

A primer composition for a plastic lens was prepared in the same way as Example 36 except for using the polyvinyl acetal obtained in Example 35 and further a plastic lens having a composite film was prepared in a similar way.

### Comparative Example 29

A primer composition for a plastic lens was prepared in the same way as Example 36 except for using the polyvinyl acetal obtained in Comparative Example 27 and further a plastic lens having a composite film was prepared in a similar way.

### Comparative Example 30

A primer composition for a plastic lens was prepared in the same way as Example 36 except for using the polyvinyl acetal obtained in Comparative Example 28 and further a plastic lens having a composite film was prepared in a similar way.

Each plastic lens having a composite film prepared in Examples 36, 37 and Comparative Examples 29, 30 was evaluated on its performance with the following method. Results of the evaluation are shown in Table 7.

### (15) Evaluation of film adhesion: cross hatch tape test

The surface of a coating layer was provided with grids (100 grids) in a size of 1 mm square using a cutter, and then a cellophane adhesive tape (trade name "Sellotape", manufactured by NICHIBAN CO., LTD.) was strongly attached to the surface. Then, the actions to hold one end of the tape and peel the tape rapidly toward the direction of 90-degree angle were repeated 10 times. After this, number of grids of the surface of the coating layer, which were not peeled off from a lens and remained, was investigated, and the number of grids not peeled was represented as X and film adhesion is represented by X/100. Then, the adhesion is enhanced with X.

### (16) Evaluation of abrasion resistance

A degree of abrasion in scrubbing the surface of an anti-reflection coating 30 times with steel wool (#0000) with weight of 600 g being applied was evaluated according to the following criteria.
○: area having received abrasion.is 10% or smaller.
Δ: area having received abrasion.is larger than 10% and at most 30%
×: area having received abrasion.is larger than 30%.

### (17) Evaluation of weather resistance

Weathering tests of 300 hours were conducted using Ultraviolet Longlife Fademeter (Suga Test Instruments Co., Ltd.) and a degree of yellowing of the lens thereafter was measured and evaluated according to the following criteria.
○: degree of yellowing after 300 hours is lower than 2.0.
Δ: degree of yellowing after 300 hours is at least 2.0 and lower than 2.5
× : degree of yellowing after 300 hours is higher than 2.5.

### (18) Evaluation of appearance

Clearness was visually observed with a fluorescent lamp being applied in a darkroom. Results were evaluated according to the following criteria.
○: there is not cloud.
Δ: cloud is conspicuous a little.
×: cloud is clearly conspicuous.

**Table 7**

| | Adhesion | Abrasion resistance | Weather resistance | Appearance |
|---|---|---|---|---|
| Example 36 | 100/100 | ○ | ○ | ○ |
| Example 37 | 100/100 | ○ | ○ | ○ |
| Comparative Example 29 | 99/100 | Δ | ○ | ○ |
| Comparative Example 30 | 97/100 | Δ | ○ | ○ |

### Example 38

To 2749.7 ml of distilled water in a five liter separable flask were charged 4.4 g of polyvinyl alcohol (A) of which one end is carboxyl group modified by more than 90% (polymerization degree 2200, acetyl group content 1.1 mole%, sodium acetate content 0.1 weight %) and 271.2 g of polyvinyl alcohol (B) of which ends are not particularly controlled by carboxyl group (polymerization degree 2200, acetyl group content 1.1 mole%, sodium acetate content 0.1 weight %), and the mixture was raised in temperature over 90°C and dissolved thoroughly. Next, a temperature of the solution was lowered to 40°C, and 70.3 g of 35% concentrated hydrochloric acid was charged to the solution in a single step as a catalyst. Then, the solution was further cooled and 176.1 g of n-butyl aldehyde was added to the solution in parts. On the way, 35% concentrated hydrochloric acid was diluted to 230 ml and added to the solution to promote a reaction, and a temperature of the solution was raised and kept at a constant temperature for five hours, and resulting white powder was precipitated.

Next, the resulting white powder was washed with water at 50°C for 4 hours and neutralized with sodium carbonate aqueous solution so as to have a pH of above 7. Then, the white powder was washed with deionized water, filtered and dried to obtain polyvinyl acetal.

Incidentally, in the resulting polyvinyl acetal, a polymerization degree was 1800, a degree of acetalization was 70.4 mole%, the content of acetyl group was 1.2 mole%, and a vinyl alcohol unit was 28.4 mole%.

44 g of the resulting polyvinyl acetal, 48 g of butylated melamine resin (manufactured by DAINIPPON INK AND CHEMICALS, INCORPORATED: superbeckamine) and 4.4 g of epoxy resin (manufactured by Japan Epoxy Resins Co., Ltd.: Epicoat 1001) were dissolved in 284 g of mixed solvent of methanol, methyl ethyl ketone and toluene (weight ratio 2:2:1) and further 0.2 g of p-toluenesulfonic acid was added to this solution to prepare an adhesive for metal foil.

The resulting adhesive for metal foil was applied to copper foil having a thickness of 35 µm so as to be 130 g/m² and dried at 120°C for 4 minutes to obtain copper foil with an adhesive layer. This copper foil with an adhesive layer and a phenol-impregnated paper were pressed at 150°C and at a pressure of 12 MPa for 30 minutes and the copper foil was attached to the impregnated paper by pressure to obtain an insulating substrate with copper foil.

### Comparative Example 31

Polyvinyl acetal was obtained by following the same procedure as that of Example 38 except that 8.8 g of polyvinyl alcohol (A) which does not contain carboxyl group (polymerization degree 2200, acetyl group content 1.1 mole%, sodium acetate content 0.1 weight %) and 266.8 g of polyvinyl alcohol (B) of which ends are not particularly controlled by carboxyl group (polymerization degree 2200, acetyl group content 1.1 mole%, sodium acetate content 0.1 weight %) were charged to 2747.9 ml of distilled water in a five liter separable flask and the mixture was raised in temperature over 90°C and dissolved thoroughly, and further copper foil with an adhesive layer and an insulating substrate with copper foil were prepared by following the similar procedure.

### Comparative Example 32

Polyvinyl acetal was obtained by following the same procedure as that of Example 38 except that 17.6 g of polyvinyl alcohol (A) which does not contain carboxyl group (polymerization degree 2200, acetyl group content 1.1 mole%, sodium acetate content 0.1 weight %) and 258 g of polyvinyl alcohol (B) of which ends are not particularly controlled by carboxyl group (polymerization degree 2200, acetyl group content 1.1 mole%, sodium acetate content 0.1 weight %) were charged to 2747.9 ml of distilled water in a five liter separable flask and the mixture was raised in temperature over 90°C and dissolved thoroughly, and further copper foil with an adhesive layer and an insulating substrate with copper foil were prepared by following the similar procedure.

### Comparative Example 33

Polyvinyl acetal was obtained by following the same procedure as that of Example 38 except that 275.6 g of polyvinyl alcohol which does not contain carboxyl group (polymerization degree 2200, acetyl group content 1.0 mole%, sodium acetate content 0.1 weight %) was charged to 2747.9 ml of distilled water in a five liter separable flask and the mixture was raised in temperature over 90°C and dissolved thoroughly, and further copper foil with an adhesive layer and an insulating substrate with copper foil were prepared by following the similar procedure.

### Comparative Example 34

Polyvinyl acetal was obtained by following the same procedure as that of Example 38 except that 275.9 g of polyvinyl alcohol of which main chain is carboxyl group modified by 0.2 mole% (polymerization degree 2200, acetyl group content 3.2 mole%, sodium acetate content 0.1 weight %) was charged to 2774.2 ml of distilled water in a five liter separable flask and the mixture was raised in temperature over 90°C and dissolved thoroughly, and further copper foil with an adhesive layer and an insulating substrate with copper foil were prepared by following the similar procedure.

With respect to the insulating substrate with copper foil prepared in Example 38 and Comparative Examples 31 to 34, solder heat resistance and adhesion strength for peeling were measured according to JIS K 6854. Results are shown in Table 8. Here, test temperature was 260°C for the solder heat resistance and 20°C for the adhesion strength for peeling.

**Table 8**

| | Solder heat resistance (s) | Adhesion strength for peeling (MPa) |
|---|---|---|
| Example 38 | 38 | 0.230 |
| Comporative Example 31 | 37 | 0.275 |
| Comparative Example 32 | 36 | 0.315 |
| Comparative Example 33 | 32 | 0.199 |
| Comparative Example 34 | 37 | 0.225 |

### INDUSTRIAL APPLICABILITY

Because the present invention is constituted as described above, it is possible to provide polyvinyl acetal, a polyvinyl acetal composition, ink, coating material, a dispersant, a ceramic green sheet, a primer for a plastic lens, a recording material for water-based ink and an adhesive for metal foil, which are superior in film-forming capability, dispersibility of a dispersion matter and adhesion to the surface to be coated, and can realize higher solid contents.

## Claims

1. A polyvinyl acetal,
which contains one to three functional groups at ends of a molecule.

2. The polyvinyl acetal according to claim 1,
wherein the functional group is an ionic group.

3. The polyvinyl acetal according to claim 2,
wherein the ionic group is an acidic group.

4. The polyvinyl acetal according to claim 2,
wherein the ionic group is carboxyl group or sulfonic acid group.

5. The polyvinyl acetal according to claim 2,
wherein the ionic group is a basic group.

6. The polyvinyl acetal according to claim 5,
wherein the ionic group contains a nitrogen atom.

7. The polyvinyl acetal according to any of claims 1 to 6,
wherein the polyvinyl acetal has a polymerization degree of 50 to 3500.

8. The polyvinyl acetal according to any of claims 1 to 7,
wherein a degree of acetalization is 60 mole% or more when an acetal group is considered as two acetalized hydroxyl groups.

9. The polyvinyl acetal according to any of claims 1 to 8,
wherein an amount of residual acetyl groups is 3 to 10 mole% when an acetal group is considered as two acetalized hydroxyl groups.

10. A polyvinyl acetal composition,
which contains the polyvinyl acetal according to any of claims 1 to 9.

11. The polyvinyl acetal composition according to claim 10,
wherein the content of the polyvinyl acetal in the polyvinyl acetal composition is 5 weight % or more.

12. An ink,
wherein the polyvinyl acetal according to any of claims 1 to 9 is used as a binder.

13. A coating material,
wherein the polyvinyl acetal according to any of claims 1 to 9 is used as a binder.

14. A dispersant,
which comprises the polyvinyl acetal according to any of claims 1 to 9.

15. A heat-developable photosensitive material,
wherein the polyvinyl acetal according to any of claims 1 to 9 is used as a binder.

16. A slurry for a ceramic green sheet,
which contains the polyvinyl acetal according to any of claims 1 to 9, ceramic powder, a plasticizer and a solvent.

17. A ceramic green sheet,
which is prepared by the slurry for a ceramic green sheet according to claim 16.

18. A primer composition for a plastic lens,
which contains the polyvinyl acetal according to any of claims 1 to 9, a hydrolyzable organosilane compound or hydrolysate thereof, an organometallic alkoxide compound, inorganic micro particles, and a curing catalyst.

19. A plastic lens with a hard coat layer formed on the both surfaces of a plastic lens substrate,
wherein a primer layer using the primer composition for a plastic lens according to claim 18 is formed between the plastic lens substrate and the hard coat layer.

20. A recording material for water-based ink provided with an ink receiving layer on its supporting element,
wherein the ink receiving layer comprises the polyvinyl acetals according to any of claims 1 to 9, a water-soluble epoxy compound and a composition containing at least one kind of micro particles selected from the group consisting of silicic acid, silica, kaolin, clay, alumina, calcium carbonate, zeolite, titanium oxide, talc and a spherical polymer.

21. The recording material for water-based ink according to claim 20,
wherein the ink receiving layer comprises a composition containing 15 to 40 parts of the water-soluble epoxy compound per 100 parts by weight of polyvinyl acetal.

22. An adhesive for metal foil,
which contains the polyvinyl acetal according to any of claims 1 to 9, a thermosetting resin, and a solvent.

## Patentansprüche

1. Ein Polyvinylacetal, welches ein bis drei funktionelle Gruppen an Enden eines Moleküls enthält.

2. Das Polyvinylacetal gemäß Anspruch 1, wobei die funktionelle Gruppe eine ionische Gruppe ist.

3. Das Polyvinylacetal gemäß Anspruch 2, wobei die ionische Gruppe eine saure Gruppe ist.

4. Das Polyvinylacetal gemäß Anspruch 2, wobei die ionische Gruppe eine Carboxylgruppe oder eine Sulfonsäuregruppe ist.

5. Das Polyvinylacetal gemäß Anspruch 2, wobei die ionische Gruppe eine basische Gruppe ist.

6. Das Polyvinylacetal gemäß Anspruch 5, wobei die ionische Gruppe ein Stickstoffatom enthält.

7. Das Polyvinylacetal gemäß irgendeinem der Ansprüche 1 bis 6, wobei das Polyvinylacetal einen Polymerisationsgrad von 50 bis 3500 aufweist.

8. Das Polyvinylacetal gemäß irgendeinem der Ansprüche 1 bis 7, wobei der Acetalisierungsgrad 60 Mol-% oder mehr beträgt, wenn eine Acetalgruppe als zwei acetalisierte Hydroxylgruppen betrachtet wird.

9. Das Polyvinylacetal gemäß irgendeinem der Ansprüche 1 bis 8, wobei die Menge an restlichen Acetylgruppen 3 bis 10 Mol-% beträgt, wenn eine Acetalgruppe als zwei acetalisierte Hydroxylgruppen betrachtet wird.

10. Eine Polyvinylacetalzusammensetzung, welche das Polyvinylacetal gemäß irgendeinem der Ansprüche 1 bis 9 enthält.

11. Die Polyvinylacetalzusammensetzung gemäß Anspruch 10, wobei der Gehalt des Polyvinylacetals in der Polyvinylacetalzusammensetzung 5 Gew.-% oder mehr beträgt.

12. Eine Tinte, in welcher das Polyvinylacetal gemäß irgendeinem der Ansprüche 1 bis 9 als ein Bindemittel verwendet wird.

13. Ein Beschichtungsmaterial, in welchem das Polyvinylacetal gemäß irgendeinem der Ansprüche 1 bis 9 als ein Bindemittel verwendet wird.

14. Ein Dispergiermittel, welches das Polyvinylacetal gemäß irgendeinem der Ansprüche 1 bis 9 umfasst.

15. Ein durch Wärme entwickelbares lichtempfindliches Material, in welchem das Polyvinylacetal gemäß irgendeinem der Ansprüche 1 bis 9 als ein Bindemittel verwendet wird.

16. Eine Aufschlämmung für eine keramische Grünfolie, welche das Polyvinylacetal gemäß irgendeinem der Ansprüche 1 bis 9, keramisches Pulver, einen Weichmacher und ein Lösungsmittel enthält.

17. Eine keramische Grünfolie, welche durch die Aufschlämmung für eine keramische Grünfolie gemäß Anspruch 16 hergestellt wird.

18. Eine Primerzusammensetzung für eine Kunststofflinse, welche das Polyvinylacetal gemäß irgendeinem der Ansprüche 1 bis 9, eine hydrolysierbare Organosilanverbindung oder ein Hydrolysat von dieser, eine organometallische Alkoxidverbindung, anorganische Mikropartikel und einen Härtungskatalysator enthält.

19. Eine Kunststofflinse mit einer harten Deckschicht, die auf den beiden Oberflächen eines Kunststofflinsensubstrats gebildet ist, wobei eine Primerschicht unter Verwendung der Primerzusammensetzung für eine Kunststofflinse gemäß Anspruch 18 zwischen dem Kunststofflinsensubstrat und der harten Deckschicht gebildet wird.

20. Ein Aufzeichnungsmaterial für Tinte auf Wasserbasis, das mit einer Tintenaufnahmeschicht auf dessen Trägerelement ausgestattet ist, wobei die Tintenaufnahmeschicht die Polyvinylacetale gemäß irgendeinem der Ansprüche 1 bis 9, eine wasserlösliche Epoxyverbindung und eine Zusammensetzung umfasst, welche wenigstens eine Art von Mikropartikeln enthält, die ausgewählt sind aus der Gruppe, bestehend aus Kieselsäure, Silica, Kaolin, Ton, Aluminiumoxid, Calciumcarbonat, Zeolith, Titanoxid, Talkum und einem kugelförmigen Polymer.

21. Das Aufzeichnungsmaterial für Tinte auf Wasserbasis gemäß Anspruch 20, wobei die Tintenaufnahmeschicht eine Zusammensetzung umfasst, die 15 bis 40 Teile der wasserlöslichen Epoxyverbindung pro 100 Gewichtsteilen des Polyvinylacetals enthält.

22. Ein Klebstoff für eine Metallfolie, welcher das Polyvinylacetal gemäß irgendeinem der Ansprüche 1 bis 9, ein durch Wärme härtbares Harz und ein Lösungsmittel enthält.

## Revendications

1. Polyvinylacétal, qui contient un à trois groupes fonctionnels aux extrémités d'une molécule.

2. Polyvinylacétal selon la revendication 1, dans lequel le groupe fonctionnel est un groupe ionique.

3. Polyvinylacétal selon la revendication 2, dans lequel le groupe ionique est un groupe acide.

4. Polyvinylacétal selon la revendication 2, dans lequel le groupe ionique est un groupe carboxyle ou un groupe acide sulfonique.

5. Polyvinylacétal selon la revendication 2, dans lequel le groupe ionique est un groupe basique.

6. Polyvinylacétal selon la revendication 5, dans lequel le groupe ionique contient un atome d'azote.

7. Polyvinylacétal selon l'une quelconque des revendications 1 à 6, dans lequel le polyvinylacétal a un degré de polymérisation de 50 à 3500.

8. Polyvinylacétal selon l'une quelconque des revendications 1 à 7, dans lequel un degré d'acétalisation est de 60 % en moles ou plus quand un groupe acétal est considéré comme deux groupes hydroxyles acétalisés.

9. Polyvinylacétal selon l'une quelconque des revendications 1 à 8, dans lequel une quantité des groupes acétyles résiduels est de 3 à 10 % en moles quand un groupe acétal est considéré comme deux groupes hydroxyles acétalisés.

10. Composition de polyvinylacétal, qui contient le polyvinylacétal selon l'une quelconque des revendications 1 à 9.

11. Composition de polyvinylacétal selon la revendication 10, dans laquelle la teneur en polyvinylacétal dans la composition de polyvinylacétal est de 5 % en poids ou plus.

12. Encre, dans laquelle le polyvinylacétal selon l'une quelconque des revendications 1 à 9 est utilisé comme liant.

13. Matériau de revêtement, dans lequel le polyvinylacétal selon l'une quelconque des revendications 1 à 9 est utilisé comme liant.

14. Dispersant qui comprend le polyvinylacétal selon l'une quelconque des revendications 1 à 9.

15. Matériau photosensible thermodéveloppable, dans lequel le polyvinylacétal selon l'une quelconque des revendications 1 à 9 est utilisé comme liant.

16. Suspension pour une feuille brute en céramique, qui contient le polyvinylacétal selon l'une, quelconque des revendications 1 à 9, une poudre céramique, un plastifiant et un solvant.

17. Feuille brute en céramique, qui est préparée par une suspension destinée à une feuille brute en céramique selon la revendication 16.

18. Composition d'apprêt pour une lentille plastique, qui contient le polyvinylacétal selon l'une quelconque des revendications 1 à 9, un composé d'organosilane hydrolysable ou son hydrolysat, un composé d'alcoxyde organométallique, de microparticules minérales et un catalyseur de durcissement.

19. Lentille plastique avec une couche de revêtement dur formée sur les deux surfaces d'un substrat de lentille plastique, dans laquelle une couche d'apprêt utilisant la composition d'apprêt pour une lentille plastique selon la revendication 18 est formée entre le substrat de la lentille plastique et la couche de revêtement dur.

20. Matériau d'enregistrement pour une encre à base aqueuse, muni d'une couche de réception de l'encre sur son élément support, dans lequel la couche de réception d'encre comprend les polyvinylacétals selon l'une quelconque des revendications 1 à 9, un composé époxy hydrosoluble et une composition contenant au moins un type de microparticules sélectionnées dans le groupe constitué de l'acide silicique, de la silice, du kaolin, de l'argile, de l'alumine, du carbonate de calcium, de la zéolite, de l'oxyde de titane, du talc et d'un polymère sphérique.

21. Matériau d'enregistrement pour une encre à base aqueuse selon la revendication 20, dans lequel la couche de réception d'encre comprend une composition contenant de 15 à 40 parties de composé époxy hydrosoluble pour 100 parties en poids de polyvinylacétal.

22. Adhésif pour un film métallique, qui contient le polyvinylacétal selon l'une quelconque des revendications 1 à 9, une résine thermodurcissable et un solvant.
